# EUROPEAN PATENT APPLICATION

(11) **EP 4 116 311 A1**
(43) Date of publication of application: **11.01.2023**
(21) Application number: 20922579.6
(22) Date of filing: 25.09.2020
(51) Int. Cl.: C07F 9/6578, C07B 61/00, C09K 3/00, C09K 9/02, G02B 5/22

(54) **DITHIENOPHOSPHORINE COMPOUND, AND COLORLESS NEAR-INFRARED ABSORBING MATERIAL AND ELECTROCHROMIC MATERIAL EACH USING SAME**

(30) Priority: 04.03.2020 JP 2020037129
(71) Applicant: Kyoto University, Kyoto-shi, Kyoto 606-8501 (JP)
(72) Inventor: NAKA, Aiko, Kyoto-shi, Kyoto 606-8501 (JP); OEY, Stanley Surya Winata, Kyoto-shi, Kyoto 606-8501 (JP)
(74) Representative: Held, Stephan
(86) International application number: PCT/JP2020/036443
(87) International publication number: WO 2021/176755

(57) **Abstract**

A dithienophosphorine compound having a cation represented by the formula 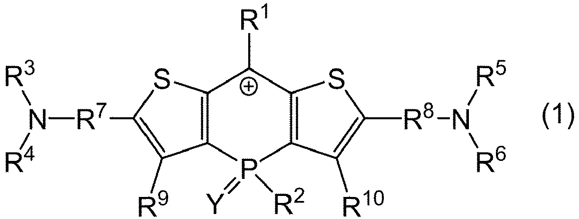 (wherein Y represents an oxygen atom or a sulfur atom; R¹ represents a hydrogen atom, an alkyl group, an alkenyl group, an alkynyl group, an aryl group, or a heteroaryl group; R² represents a hydroxy group, an alkyl group, an alkoxy group, an alkenyl group, an alkynyl group, an aryl group, or a heteroaryl group; R³, R⁴, R⁵, and R⁶ each independently represent a hydrogen atom, an alkyl group, an alkenyl group, or an aryl group; R⁷ and R⁸ each independently represents an arylene group or a heteroarylene group; R⁹ and R¹⁰ each independently represent a hydrogen atom, a halogen atom, a sulfonyl group, an alkyl group or an aryl group; each group may have one or more substituents; and R³, R⁴, and R⁷ may bind to each other and/or R⁵, R⁶, and R⁸ may bind to each other to form a ring together with an adjacent nitrogen atom) is an organic compound that has a maximum absorption wavelength in the NIR-II region (from 1000 to 1500 nm) although the molecular weight thereof is not extremely high, and that has excellent solubility in organic solvents and high structural selectivity.

## Description

### Technical Field

The present invention relates to a dithienophosphorine compound, and a colorless near-infrared absorbing material and an electrochromic material each using the dithienophosphorine compound.

### Background Art

Pigments based on an organic compound have long been used as dyes. Recently, such pigments have also been used, for example, as light-absorbing materials for photoenergy conversion devices (e.g., solar cells) and pigments for bioimaging, and thus find a wide variety of applications. These are all based on utilizing light absorption in the visible light region and are accompanied by visible coloration. On the other hand, compounds that absorb light only in the invisible (not visible to the naked eye) wavelength region, such as the ultraviolet region and the near-infrared region, are expected to find new applications that are different from the applications of conventional pigment materials, such as security inks and sensor materials. In particular, considering low toxicity to living organisms and high permeability, pigments that have strong light absorption in the near-infrared region are attractive.

In recent years, research on organic pigments that efficiently absorb near-infrared light for the purpose of finding application in, for example, bio-imaging and sensors, and improving solar cell performance, has been active worldwide. Many excellent pigments with strong light absorption in the near-infrared region have been reported. However, since conventional near-infrared absorbing pigments have pronounced light absorption in the visible light region as well as in the near-infrared region, most of them have strong coloration and there have been successfully synthesized only several organic compounds that have colorless near-infrared absorption properties (see, for example, Non-Patent Literature (NPL) 1 and 2).

### Citation List

### Non-patent Literature

NPL 1: Angew. Chem. Int. Ed. 2007, 46, 3750
NPL 2: J. Org. Chem. 2015, 80, 12146.

### Summary of Invention

### Technical Problem

Among the colorless organic compounds with near-infrared absorption properties reported so far, a pigment based on a diketopyrrolopyrrole skeleton (Non-Patent Literature (NPL) 1) has a maximum absorption wavelength in a relatively short wavelength region (800 to 1000 nm) called NIR-I at the highest in the near-infrared region. For applications such as biosensors, a pigment that has light absorption in the NIR-II region (1000 to 1500 nm) in which light absorption by living tissue is the weakest in the near-infrared region called the "window of the living body" is more preferable. On the other hand, a sexterrylene carboxylic acid bisimide pigment (Non-Patent Literature (NPL) 2) can have a maximum absorption wavelength in the NIR-II region if its structure and the solvent to be used are both optimized. However, this requires an extremely large molecular weight, and the sexterrylene carboxylic acid bisimide pigment, which is highly hydrophobic and has limited solubility in organic solvents, cannot be put into practical use. Further, an electrochromic material is also known as a substance whose color tone is changed by application of electricity. However, as described above, no material has been known that has light absorption in the NIR-II region (1000 to 1500 nm), and whose color tone changes due to changes in the maximum absorption wavelength when electricity is applied.

Accordingly, an object of the present invention is to provide an organic compound that has a maximum absorption wavelength in the NIR-II region (1000 to 1500 nm) without the necessity of having an extremely high molecular weight, and that has excellent solubility in organic solvents and can have a wide variety of structural modifications. Another object of the present invention is to provide a material that has a maximum absorption wavelength in the NIR-II region (1000 to 1500 nm), and whose color tone changes due to changes in the maximum absorption wavelength when electricity is applied.

### Solution to Problem

In view of the above objects, the present inventors conducted extensive research. As a result, the present inventors found that when a compound has a dithienophosphorine skeleton formed by replacing the benzene ring moiety of a rhodamine pigment with a thiophene skeleton and replacing the oxygen atom in the skeleton with a phosphorus-containing group and when π-conjugation in the dithienophosphorine skeleton is extended by an aromatic or heteroaromatic ring, the resulting compound has the maximum absorption wavelength in the NIR-II region (1000 to 1500 nm) without the necessity of having an extremely high molecular weight, and also has excellent solubility in organic solvents and high structure selectivity. The present invention has been accomplished as a result of further research based on the above finding. The present invention includes the following features.

Item 1. A dithienophosphorine compound having a cation represented by formula (1): 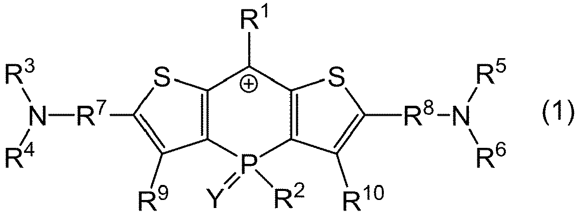
(wherein
Y represents an oxygen atom or a sulfur atom;
R¹ represents a hydrogen atom, a substituted or unsubstituted alkyl group, a substituted or unsubstituted alkenyl group, a substituted or unsubstituted alkynyl group, a substituted or unsubstituted aryl group, or a substituted or unsubstituted heteroaryl group;
R² represents a hydroxy group, a substituted or unsubstituted alkyl group, a substituted or unsubstituted alkoxy group, a substituted or unsubstituted alkenyl group, a substituted or unsubstituted alkynyl group, a substituted or unsubstituted aryl group, or a substituted or unsubstituted heteroaryl group;
R³, R⁴, R⁵, and R⁶ are the same or different and represent a hydrogen atom, a substituted or unsubstituted alkyl group, a substituted or unsubstituted alkenyl group, or a substituted or unsubstituted aryl group;
R⁷ and R⁸ are the same or different and represent a substituted or unsubstituted arylene group or a substituted or unsubstituted heteroarylene group;
R³ and R⁴ may bind to each other and/or R⁵ and R⁶ may bind to each other to form a ring together with an adjacent nitrogen atom;
at least one of the following pairs: R³ and R⁷, R⁴ and R⁷, R⁵ and R⁸, and R⁶ and R⁸, may bind to each other to form a ring with an adjacent nitrogen atom; and
R⁹ and R¹⁰ are the same or different and represent a hydrogen atom, a halogen atom, a sulfonyl group, a substituted or unsubstituted alkyl group, or a substituted or unsubstituted aryl group).

Item 2. The dithienophosphorine compound according to Item 1, wherein the compound is represented by formula (1A): 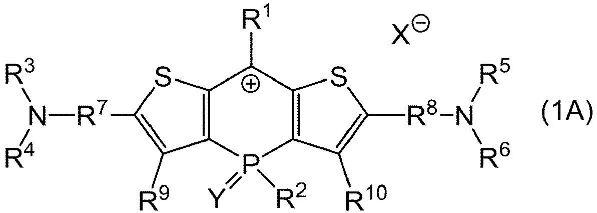 (wherein Y, R¹, R², R³, R⁴, R⁵, R⁶, R⁷, R⁸, R⁹, and R¹⁰ are as defined above, and X⁻ represents an anion).

Item 3. A dithienophosphorine compound represented by formula (2) : 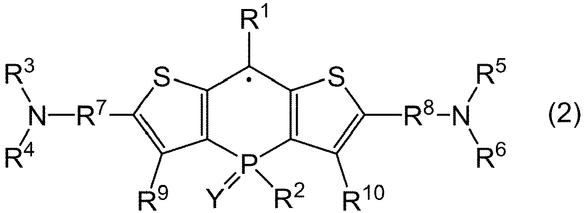
(wherein Y represents an oxygen atom or a sulfur atom;
R¹ represents a hydrogen atom, a substituted or unsubstituted alkyl group, a substituted or unsubstituted alkenyl group, a substituted or unsubstituted alkynyl group, a substituted or unsubstituted aryl group, or a substituted or unsubstituted heteroaryl group;
R² represents a hydroxy group, a substituted or unsubstituted alkyl group, a substituted or unsubstituted alkoxy group, a substituted or unsubstituted alkenyl group, a substituted or unsubstituted alkynyl group, a substituted or unsubstituted aryl group, or a substituted or unsubstituted heteroaryl group;
R³, R⁴, R⁵, and R⁶ are the same or different and represent a hydrogen atom, a substituted or unsubstituted alkyl group, a substituted or unsubstituted alkenyl group, or a substituted or unsubstituted aryl group;
R⁷ and R⁸ are the same or different and represent a substituted or unsubstituted arylene group or a substituted or unsubstituted heteroarylene group;
R³ and R⁴ may bind to each other and/or R⁵ and R⁶ may bind to each other to form a ring with an adjacent nitrogen atom;
at least one of the following pairs: R³ and R⁷, R⁴ and R⁷, R⁵ and R⁸, and R⁶ and R⁸, may bind to each other to form a ring with an adjacent nitrogen atom; and
R⁹ and R¹⁰ are the same or different and represent a hydrogen atom, a halogen atom, a sulfonyl group, a substituted or unsubstituted alkyl group, or a substituted or unsubstituted aryl group).

Item 4. The dithienophosphorine compound according to any one of Items 1 to 3, wherein R⁷ and R⁸ are the same or different and represent a substituted or unsubstituted arylene group.

Item 5. The dithienophosphorine compound according to any one of Items 1 to 4, wherein R¹ is a substituted or unsubstituted aryl group.

Item 6. The dithienophosphorine compound according to any one of Items 1 to 5, wherein Y is an oxygen atom.

Item 7. The dithienophosphorine compound according to any one of Items 1 to 6, wherein R² is a substituted or unsubstituted aryl group.

Item 8. The dithienophosphorine compound according to any one of Items 1 to 7, wherein R³, R⁴, R⁵, and R⁶ are the same or different and represent a substituted or unsubstituted alkyl group or a substituted or unsubstituted aryl group.

Item 9. The dithienophosphorine compound according to any one of Items 1 to 8, wherein R⁹ and R¹⁰ are both a hydrogen atom.

Item 10. The dithienophosphorine compound according to any one of Items 1 to 9, having a maximum absorption wavelength at 1000 to 1500 nm.

Item 11. A near-infrared absorbing material comprising the dithienophosphorine compound of any one of Items 1, 2, and 4 to 10.

Item 12. The near-infrared absorbing material according to Item 11, which is a colorless near-infrared absorbing material.

Item 13. An electrochromic material comprising the dithienophosphorine compound of any one of Items 1 to 10.

Item 14. A heat shield material comprising the dithienophosphorine compound of any one of Items 1, 2, and 4 to 10.

### Advantageous Effects of Invention

The dithienophosphorine compound of the present invention has a dithienophosphorine skeleton formed by replacing the benzene ring moiety of a rhodamine pigment with a thiophene ring and replacing the oxygen atom in the skeleton with a phosphorus-containing group, and extension of n-conjugation in the dithienophosphorine skeleton by an aromatic or heteroaromatic ring enables the resulting dithienophosphorine compound to have a maximum absorption wavelength in the NIR-II region (1000 to 1500 nm) without the necessity of having an extremely high molecular weight, and also has excellent solubility in organic solvents.

Since the dithienophosphorine compound of the present invention has a high degree of freedom in structural modification to the pigment skeleton, the dithienophosphorine compound has superiority as a highly practical pigment in terms of, for example, adjustment of solubility in organic solvents or support on a polymer chain or glass surface by using a chemical reaction.

The dithienophosphorine compound of the present invention in the form of a solution has strong light absorption in the near-infrared NIR-II region (1000 to 1500 nm) but has almost no absorption in the visible light region. This property is useful as a near-infrared absorbing material, which is invisible to the naked eye. Based on this property, the dithienophosphorine compound of the present invention is a material that has strong absorption capacity of near-infrared rays and also has high transmittance of visible light, and is useful as a heat shield material. Thus, the dithienophosphorine compound of the present invention is colorless and transparent but when converted to a dithienophosphorine compound of the present invention having a radical by electrical reduction, the resulting dithienophosphorine compound of the present invention can have green color. Accordingly, the compound of the present invention is also useful as an electrochromic material whose color tone is changed by application of electricity.

### Brief Description of Drawings

Fig. 1 shows UV-Vis-NIR absorption spectra of the dithienophosphorine compounds obtained in Examples 1, 2, 4, and 5 and Comparative Example 1 (Compounds 4, 8, 10, 14, and 15).
Fig. 2 shows cyclic voltammograms of the dithienophosphorine compounds obtained in Examples 1 and 2 (Compounds 4 and 8).
Fig. 3 shows the results of electron paramagnetic resonance (EPR) measurements from which the presence of the dithienophosphorine compound of the present invention having a radical (Compound 4·) obtained by a reaction of Compound 4 with decamethylferrocene was confirmed.
Fig. 4 shows a UV-Vis-NIR absorption spectrum of the dithienophosphorine compound (Compound 4·) obtained by electroreduction of the dithienophosphorine compound (Compound 4) obtained in Example 1. The result of the dithienophosphorine compound (Compound 4) obtained in Example 1 is also shown.

### Description of Embodiments

In the present specification, the terms "comprise," "contain," and "include" encompass the concepts of comprising, consisting essentially of, and consisting of. In the present specification, a numerical range indicated by "A to B" means A or more and B or less.

The present invention is not limited to the following embodiments. Changes, modifications, and improvements can be made without departing from the scope of the invention.

### 1. Dithienophosphorine Compound

The dithienophosphorine compound of the present invention has a cation represented by formula (1): 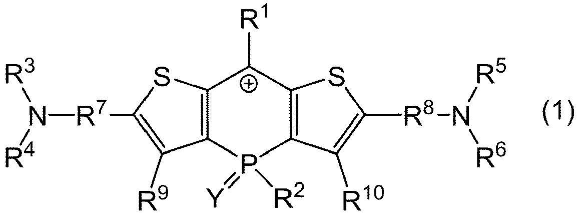 (wherein
Y represents an oxygen atom or a sulfur atom;
R¹ represents a hydrogen atom, a substituted or unsubstituted alkyl group, a substituted or unsubstituted alkenyl group, a substituted or unsubstituted alkynyl group, a substituted or unsubstituted aryl group, or a substituted or unsubstituted heteroaryl group;
R² represents a hydroxy group, a substituted or unsubstituted alkyl group, a substituted or unsubstituted alkoxy group, a substituted or unsubstituted alkenyl group, a substituted or unsubstituted alkynyl group, a substituted or unsubstituted aryl group, or a substituted or unsubstituted heteroaryl group;
R³, R⁴, R⁵, and R⁶ are the same or different and represent a hydrogen atom, a substituted or unsubstituted alkyl group, a substituted or unsubstituted alkenyl group, or a substituted or unsubstituted aryl group;
R⁷ and R⁸ are the same or different and represent a substituted or unsubstituted arylene group or a substituted or unsubstituted heteroarylene group;
R³ and R⁴ may bind to each other and/or R⁵ and R⁶ may bind to each other to form a ring with an adjacent nitrogen atom;
at least one of the following pairs: R³ and R⁷, R⁴ and R⁷, R⁵ and R⁸, and R⁶ and R⁸, may bind to each other to form a ring with an adjacent nitrogen atom; and
R⁹ and R¹⁰ are the same or different and represent a hydrogen atom, a halogen atom, a sulfonyl group, a substituted or unsubstituted alkyl group, or a substituted or unsubstituted aryl group).

The dithienophosphorine compound of the present invention can be replaced with a dithienophosphorine compound represented by formula (1A): 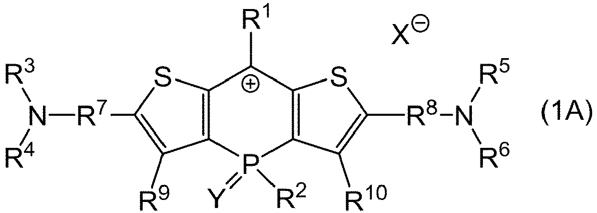 (wherein Y, R¹, R², R³, R⁴, R⁵, R⁶, R⁷, R⁸, R⁹, and R¹⁰ are as defined above, and X- represents an anion).

The dithienophosphorine compound of the present invention is a novel compound that has not been described in any literature.

In formulas (1) and (1A), Y can be either an oxygen atom or a sulfur atom. However, an oxygen atom is preferred from the viewpoints of ease of synthesis, better solubility in polar solvents, and facilitating a wide range of applications such as bioimaging.

The alkyl group represented by R¹ in formulas (1) and (1A) can be a linear or branched alkyl group. The linear alkyl group is preferably a C₁-C₆ (in particular, C₁-C₄) linear alkyl group. Examples include methyl, ethyl, n-propyl, isopropyl, n-butyl, n-pentyl, and n-hexyl. The branched alkyl group is preferably a C₃-C₆ (in particular, C₃-C₅) branched alkyl group. Examples include isopropyl, isobutyl, tert-butyl, sec-butyl, neopentyl, isohexyl, and 3-methylpentyl.

Examples of substituents of the optionally substituted alkyl group represented by R¹ in formulas (1) and (1A) include a hydroxy group, halogen atoms described below, alkoxy groups described below, alkenyl groups described below, alkynyl groups described below, aryl groups described below, heteroaryl groups described below, carboxy groups, amide groups (dimethylamide, diethylamide, acetamide, etc.), and ester groups (methoxycarbonyl, ethoxycarbonyl, etc.). When the alkyl group has such substituents, the number of substituents is not particularly limited and is preferably 1 to 6 and more preferably 1 to 3.

The alkenyl group represented by R¹ in formulas (1) and (1A) is preferably a C₂-C₆ (in particular, C₂-C₄) alkenyl group. Examples include vinyl, allyl, 1-butenyl, and 2-butenyl.

Examples of substituents of the optionally substituted alkenyl group represented by R¹ in formulas (1) and (1A) include halogen atoms described below, alkyl groups described above, alkoxy groups described below, alkenyl groups described below, alkynyl groups described below, aryl groups described below, heteroaryl groups described below, carboxy groups, amide groups (dimethylamide, diethylamide, acetamide, etc.), and ester groups (methoxycarbonyl, ethoxycarbonyl, etc.). When the alkenyl group has such substituents, the number of substituents is not particularly limited and is preferably 1 to 6 and more preferably 1 to 3.

The alkynyl group represented by R¹ in formulas (1) and (1A) is preferably a C₂-C₆ (in particular, C₂-C₄) alkynyl group. Examples include ethynyl, 1-propynyl, propargyl, 1-butynyl, and 2-butynyl.

The alkynyl group represented by R¹ in formulas (1) and (1A) is preferably a C₂-C₆ (in particular, C₂-C₄) alkynyl group. Examples include ethynyl, 1-propynyl, propargyl, 1-butynyl, 2-butynyl, and like groups.

Examples of substituents of the optionally substituted alkynyl group represented by R¹ in formulas (1) and (1A) include a hydroxy group, halogen atoms described below, alkyl groups described above, alkoxy groups described below, alkenyl groups described below, alkynyl groups described below, aryl groups described below, heteroaryl groups described below, carboxy groups, amide groups (dimethylamide, diethylamide, acetamide, etc.), and ester groups (methoxycarbonyl, ethoxycarbonyl, etc.). When the alkynyl group has such substituents, the number of substituents is not particularly limited and is preferably 1 to 6 and more preferably 1 to 3.

The aryl group represented by R¹ in formulas (1) and (1A) can be a monocyclic aryl (phenyl) group or a polycyclic aryl group. Examples include phenyl, oligoaryl (naphthyl, anthryl, etc.), phenanthrenyl, fluorenyl, pyrenyl, triphenylenyl, and biphenyl.

Examples of substituents of the optionally substituted aryl group represented by R¹ in formulas (1) and (1A) include a hydroxy group, halogen atoms described below, alkyl groups described above, alkoxy groups described below, alkenyl groups described above, alkynyl groups described above, aryl groups described above, heteroaryl groups described below, carboxy groups, amide groups (dimethylamide, diethylamide, acetamide, etc.), and ester groups (methoxycarbonyl, ethoxycarbonyl, etc.). When the aryl group has such substituents, the number of substituents is not particularly limited and is preferably 1 to 6 and more preferably 1 to 3. The substitution position is also not limited. The compound may have a substituent at ortho, meta, or para position.

Examples of the heteroaryl group represented by R¹ in formulas (1) and (1A) include thienyl, furyl, and pyridyl.

Examples of substituents of the optionally substituted heteroaryl group represented by R¹ in formulas (1) and (1A) include a hydroxy group, halogen atoms described below, alkyl groups described above, alkoxy groups described below, alkenyl groups described above, alkynyl groups described above, aryl groups described above, heteroaryl groups described above, carboxy groups, amide groups (dimethylamide, diethylamide, acetamide, etc.), and ester groups (methoxycarbonyl, ethoxycarbonyl, etc.). When the heteroaryl group has such substituents, the number of substituents is not particularly limited and is preferably 1 to 6 and more preferably 1 to 3. The substitution position is also not limited. For example, when the heteroaryl group is a 6-membered heteroaryl group, the compound may have a substituent at ortho, meta, or para position.

Depending on the type of R¹, for example, the maximum absorption wavelength, solubility, color tone (colorless transparency), and stability to water can be adjusted. In particular, from the viewpoints of easily achieving cationization, enhanced solubility, and colorless transparency and ensuring stability in water, R¹ is, for example, preferably a substituted or unsubstituted aryl group or a substituted or unsubstituted heteroaryl group; more preferably a substituted or unsubstituted aryl group; even more preferably a substituted or unsubstituted monocyclic aryl group (a substituted or unsubstituted phenyl group); particularly preferably a monocyclic aryl group having a substituent at ortho position (a phenyl group having a substituent at ortho position), and more particularly preferably o-tolyl or 2,6-dimethoxyphenyl. From the viewpoint of stability to water in the neutral region, R¹ is preferably a more bulky group.

In formulas (1) and (1A), the alkyl group, alkenyl group, alkynyl group, aryl group, and heteroaryl group represented by R² can be the same as those mentioned above. The type and number of substituents can also be the same as above.

The alkoxy group represented by R² in formulas (1) and (1A) is preferably a C₁-C₆ (in particular, C₁-C₄) alkoxy group. Examples include methoxy, ethoxy, n-propoxy, n-butoxy, n-pentoxy, and n-hexoxy.

Examples of substituents of the optionally substituted alkoxy group represented by R² in formulas (1) and (1A) include a hydroxy group, halogen atoms described below, alkyl groups described above, alkoxy groups described below, alkenyl groups described above, alkynyl groups described above, aryl groups described above, heteroaryl groups described below, carboxy groups, amide groups (dimethylamide, diethylamide, acetamide, etc.), and ester groups (methoxycarbonyl, ethoxycarbonyl, etc.) When the alkoxy group has such substituents, the number of substituents is not particularly limited and is preferably 1 to 6 and more preferably 1 to 3.

Depending on the type of R², for example, the maximum absorption wavelength, solubility, and color tone (colorless transparency) can be adjusted. In particular, from the viewpoints of ease of synthesis, easily setting the maximum absorption wavelength to a longer wavelength, and easily making the compound colorless and transparent, R² is preferably a substituted or unsubstituted aryl group, more preferably a substituted or unsubstituted monocyclic aryl group (a substituted or unsubstituted phenyl group), and even more preferably a unsubstituted phenyl group.

In formulas (1) and (1A), the alkyl group, alkenyl group, and aryl group represented by R³, R⁴, R⁵, and R⁶ can be the same as those mentioned above. The type and number of substituents can also be the same as above.

Among these, from the viewpoints of ease of synthesis and ease of setting the maximum absorption wavelength to a longer wavelength, R³, R⁴, R⁵, and R⁶ are preferably, for example, a substituted or unsubstituted alkyl group, or a substituted or unsubstituted aryl group. In particular, when R³, R⁴, R⁵, and R⁶ are substituted or unsubstituted alkyl groups, it is easier to improve stability (thermal stability and chemical stability) and make the compound colorless and transparent, as compared to the case in which R³, R⁴, R⁵, and R⁶ are substituted or unsubstituted aryl groups. Therefore, when R³, R⁴, R⁵, and R⁶ are substituted or unsubstituted alkyl groups, it is easy to produce a compound that is colorless and transparent and that has a maximum absorption wavelength in the near-infrared NIR-II region.

The arylene group represented by R⁷ and R⁸ in formulas (1) and (1A) refers to a divalent group formed by removing two hydrogen atoms from an aromatic hydrocarbon ring. In particular, arylene groups having at least one atomic bond at any of ortho, meta, and para positions can be used. From the viewpoint of easily achieving colorless transparency and higher maximum absorption wavelength, an arylene group having an atomic bond at para-position is particularly preferable. Examples of aromatic hydrocarbon rings include a monocyclic aromatic hydrocarbon ring (a benzene ring) and polycyclic aromatic hydrocarbon rings. Examples include a benzene ring, a naphthalene ring, an anthracene ring, a phenanthrene ring, a fluorine ring, a pyrene ring, and a triphenylene ring.

Examples of substituents of the optionally substituted arylene group represented by R⁷ and R⁸ in formulas (1) and (1A) include a hydroxy group, halogen atoms described below, alkyl groups described above, alkoxy groups described above, alkenyl groups described above, alkynyl groups described above, aryl groups described above, heteroaryl groups described above, carboxy groups, amide groups (dimethylamide, diethylamide, acetamide, etc.), and ester groups (methoxycarbonyl, ethoxycarbonyl, etc.). When the arylene group has such substituents, the number of substituents is not particularly limited and is preferably 1 to 6 and more preferably 1 to 3. The substitution site is not particularly limited and can be appropriately selected.

The heteroarylene group represented by R⁷ and R⁸ in formulas (1) and (1A) refers to a divalent group formed by removing with two hydrogen atoms from an aromatic hydrocarbon ring. When the heteroaromatic ring is a six-membered ring, heteroarylene groups having at least one atomic bond at any of ortho, meta, or para position can be used. From the viewpoint of easily achieving colorless transparency and a higher maximum absorption wavelength, a heteroarylene group having an atomic bond at para-position is particularly preferable. Examples of heteroaromatic rings include a thiophene ring, a furan ring, and a pyridine ring.

Examples of substituents of the optionally substituted heteroarylene group represented by R⁷ and R⁸ in formulas (1) and (1A) include a hydroxy group, halogen atoms described below, alkyl groups described above, alkoxy groups described above, alkenyl groups described above, alkynyl groups described above, aryl groups described above, heteroaryl groups described above, carboxy groups, amide groups (dimethylamide, diethylamide, acetamide, etc.), and ester groups (methoxycarbonyl, ethoxycarbonyl, etc.). When the heteroarylene group has such substituents, the number of substituents is not particularly limited and is preferably 1 to 6 and more preferably 1 to 3.

Among these, from the viewpoint of easily achieving colorless transparency and a higher maximum absorption wavelength, R⁷ and R⁸ are preferably substituted or unsubstituted arylene groups, more preferably substituted or unsubstituted monocyclic arylene groups (substituted or unsubstituted phenylene groups), even more preferably substituted or unsubstituted arylene groups having an atomic bond at para position (substituted or unsubstituted p-phenylene groups).

R³ and R⁴ can bind to each other and/or R⁵ and R⁶ can bind to each other to form a ring together with an adjacent nitrogen atom. Examples of the ring formed include the aromatic hydrocarbon rings and heteroaromatic rings mentioned above. Specifically, the group represented by -NR³R⁴ or -NR⁵R⁶ can be, for example, 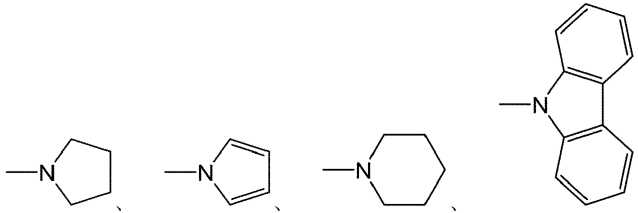 or the like. From the viewpoint of easily achieving colorless transparency and a higher maximum absorption wavelength, it is preferable that R³ and R⁴ do not form a ring and that R⁵ and R⁶ do not form a ring. In this case, R³, R⁴, R⁵, and R⁶ can be, for example, various groups used in the Examples below, such as ethyl, phenyl, and o-tolyl.

At least one of the following pairs: R³ and R⁷, R⁴ and R⁷, R⁵ and R⁸, and R⁶ and R⁸, can bind to each other to form a ring with an adjacent nitrogen atom. Examples of the ring formed include the aromatic hydrocarbon rings and heteroaromatic rings mentioned above. That is, taking into consideration the fact that R³ and R⁴ may form a ring and/or R⁵ and R⁶ may form a ring, -R⁷NR³R⁴ or -R⁸NR⁵R⁶ can be, for example, 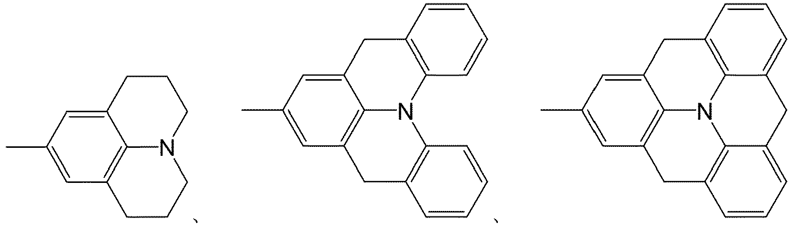 or the like. From the viewpoint of easily achieving colorless transparency and a higher maximum absorption wavelength, R³ and R⁷ preferably do not form a ring, R⁴ and R⁷ preferably do not form a ring, R⁵ and R⁸ preferably do not form a ring, and R⁶ and R⁸ preferably do not form a ring.

Examples of the halogen atoms represented by R⁹ and R¹⁰ in formulas (1) and (1A) include a fluorine atom, a chlorine atom, a bromine atom, and an iodine atom. A fluorine atom is preferred in terms of, for example, solubility, color tone, maximum absorption wavelength, and light resistance.

Examples of sulfonyl groups represented by R⁹ and R¹⁰ in formulas (1) and (1A) include a sulfo group (a group represented by -SO₃H) and further include methanesulfonyl, ethanesulfonyl, phenylsulfonyl, p-toluenesulfonyl, and trifluoromethanesulfonyl.

Examples of the alkyl group and the aryl group represented by R⁹ and R¹⁰ in formulas (1) and (1A) include those mentioned above. The type and number of substituents can also be the same as above.

Among these, from the viewpoint of ease of synthesis, R⁹ and R¹⁰ are preferably a hydrogen atom.

Examples of the anion represented by X⁻ in formula (1A) include halogen ions (e.g., fluoride ion, chloride ion, bromide ion, and iodide ion), cyanide ion, acetate ion, and trifluoroacetate ion.

From the viewpoints of ease of synthesis and easily achieving higher solubility in polar solvents, higher maximum absorption wavelength, and colorless transparency in color tone, the dithienophosphorine compound of the present invention that satisfies these conditions is preferably a dithienophosphorine compound represented by formula (1A1): 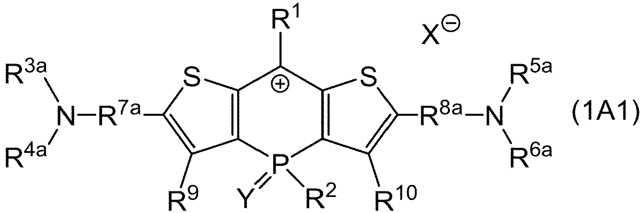
(wherein Y, R¹, R², R⁹, R¹⁰, and X⁻ are as defined above,
R^{3a}, R^{4a}, R^{5a} and R^{6a} are the same or different and represent a hydrogen atom, a substituted or unsubstituted alkyl group, a substituted or unsubstituted alkenyl group, or a substituted or unsubstituted aryl group;
R^{7a} and R^{8a} are the same or different and represent a substituted or unsubstituted arylene group or a substituted or unsubstituted heteroarylene group); and more preferably a dithienophosphorine compound represented by formula (1A2): 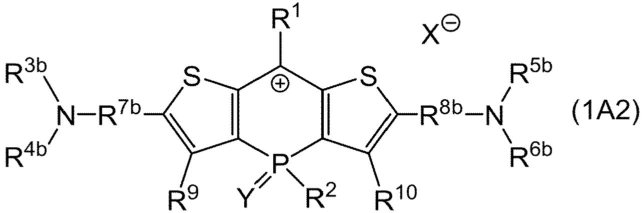
wherein Y, R¹, R², R⁹, R¹⁰ and X⁻ are as defined above;
R^{3a}, R^{4a}, R^{5a} and R^{6a} are the same or different and represent a hydrogen atom, a substituted or unsubstituted alkyl group, or a substituted or unsubstituted alkenyl group;
R^{7b} and R^{8b} are the same or different and represent a substituted or unsubstituted arylene group).

### Examples of such dithienophosphorine compounds of the present invention include

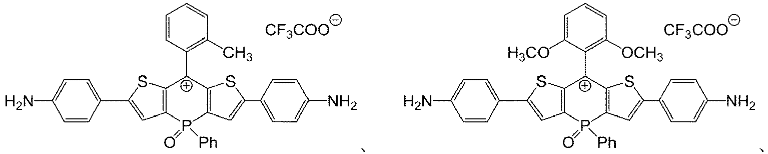

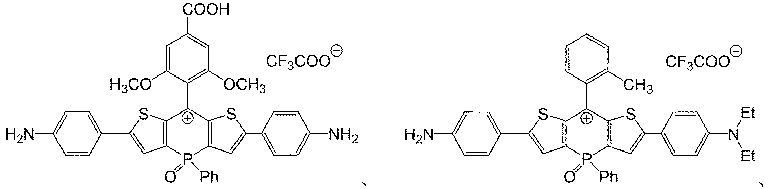

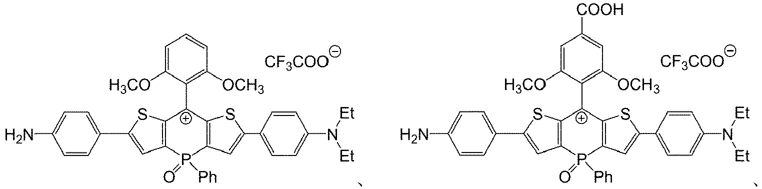

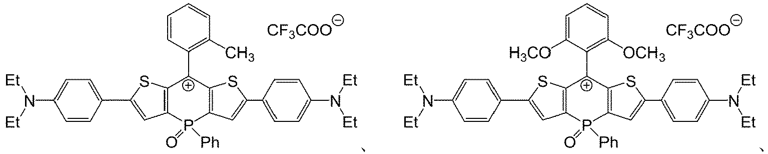

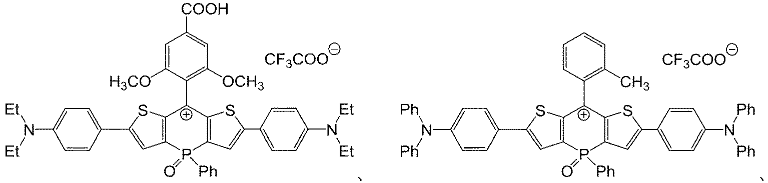

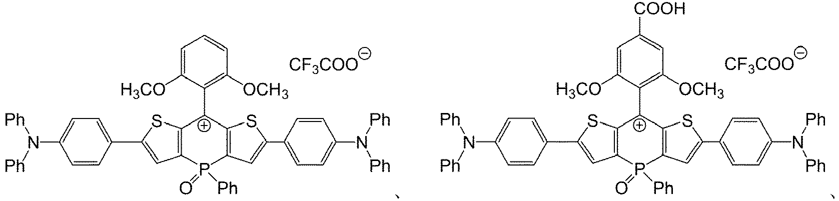

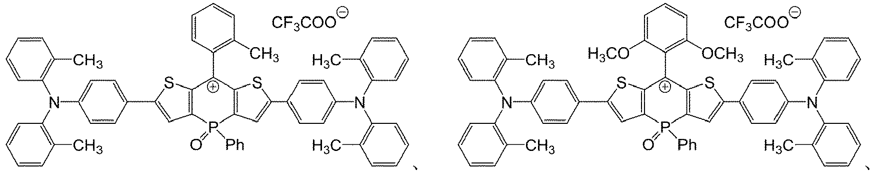

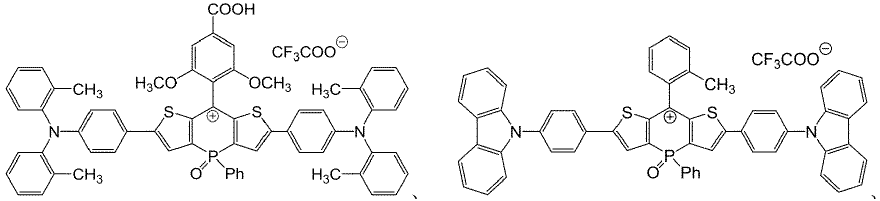

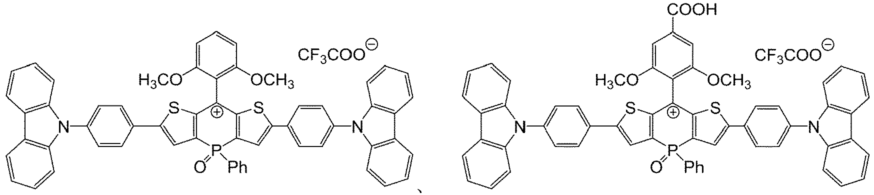

(wherein Ph represents phenyl and Et represents ethyl; the same applies below); and preferably dithienophosphorine compounds represented by formula 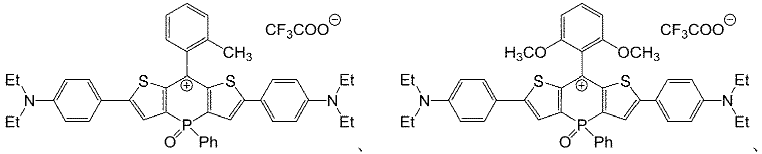 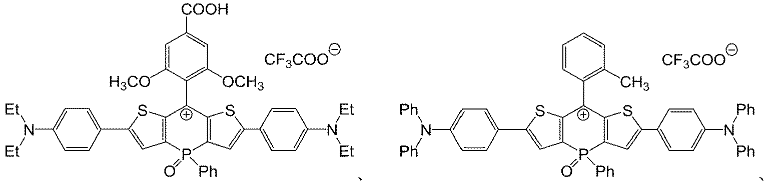 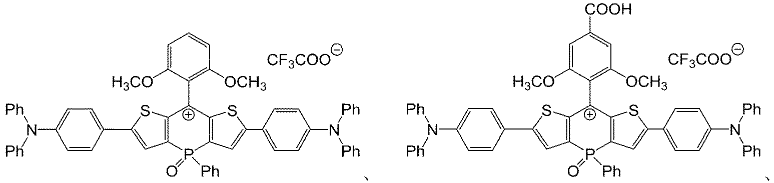 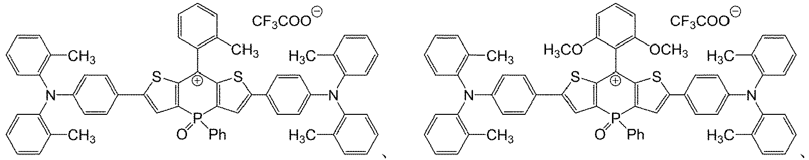 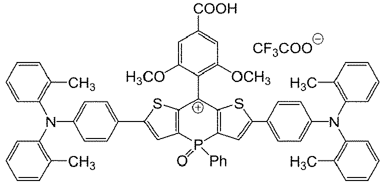 and the like; and more preferably 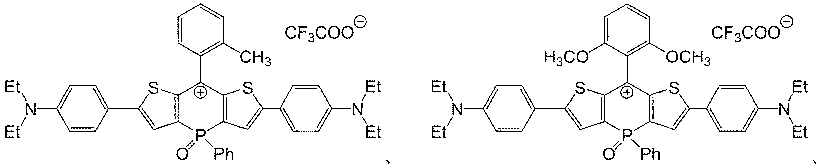 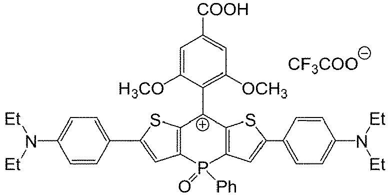 and the like.

The dithienophosphorine compound of the present invention preferably has a maximum absorption wavelength at 1000 to 1500 nm, more preferably at 1050 to 1400 nm, in the UV-visible-near-infrared absorption spectrum. Further, the dithienophosphorine compound of the present invention has almost no peak, or has a peak with a reduced peak intensity, if any, in the visible light range of 380 to 750 nm. Specifically, in the UV-visible-NIR-infrared absorption spectrum, the dithienophosphorine compound of the present invention preferably has no peak in the range of 380 to 750 nm in the visible light region; or if a peak is present, the peak intensity is preferably 30% or less of the intensity of the peak that is present in the range of 1000 to 1500 nm. Accordingly, the dithienophosphorine compound of the present invention can be colorless and transparent in the form of a solution. Because of this property, the dithienophosphorine compound of the present invention can be used as a near-infrared absorbing pigment that is indistinguishable by the naked eye (a colorless near-infrared absorbing material), and is useful as a pigment material for security inks and photoenergy conversion.

As described above, the dithienophosphorine compound of the present invention has a maximum absorption wavelength in the near-infrared NIR-II region, and has no absorption peak in the visible light region. Therefore, the dithienophosphorine compound of the present invention is a material that has both strong absorption capability for near-infrared rays and high transmittance for visible light. For example, when applied to window materials, the dithienophosphorine compound of the present invention can efficiently cut the energy of near-infrared rays contained in sunlight and significantly suppress a rise in room temperature while maintaining brightness. In other words, the dithienophosphorine compound of the present invention is useful as a heat shield material (in particular, a solar radiation shielding material).

Further, since, for example, R¹ and R² in formulas (1) and (1A) can be appropriately changed according to the desired characteristics and the dithienophosphorine compound of the present invention has a high degree of freedom of structural modification to the pigment skeleton, as compared to known colorless near-infrared absorbing pigments, the dithienophosphorine compound of the present invention is expected to have superiority as a highly practical pigment in terms of, for example, adjustment of solubility in an organic solvent, and support on a polymer chain or a glass surface using a chemical reaction.

Further, by subjecting the dithienophosphorine compound of the present invention to electrical or chemical reduction, a dithienophosphorine compound represented by formula (2): 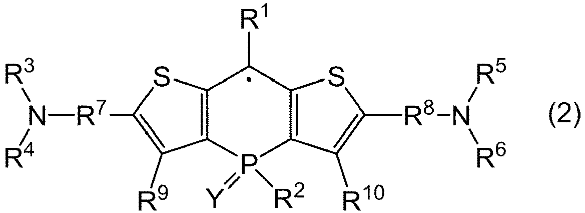 (wherein Y, R¹, R², R³, R⁴, R⁵, R⁶, R⁷, R⁸, R⁹, and R¹⁰ are as defined above) can also be obtained. Such a dithienophosphorine compound of the present invention having a radical can also be stably present. However, if the dithienophosphorine compound of the present invention is further reduced to an anionic form, it is difficult for the dithienophosphorine compound to be stably present.

The dithienophosphorine compound represented by formula (2) is also a dithienophosphorine compound of the present invention.

Examples of such a dithienophosphorine compound having a radical include dithienophosphorine compounds represented by formulas: 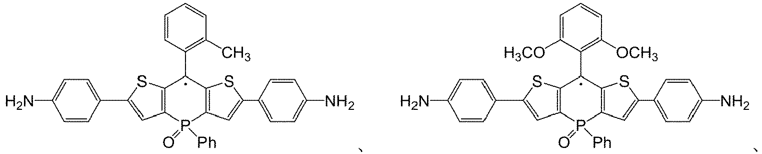 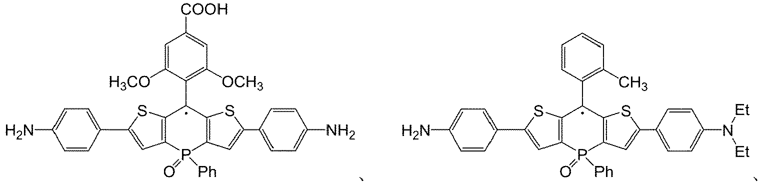 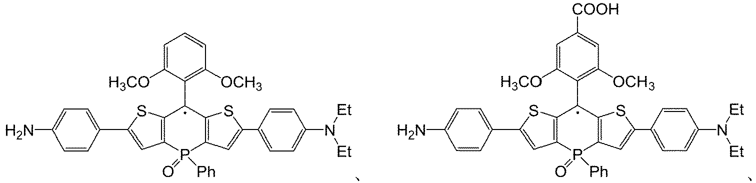 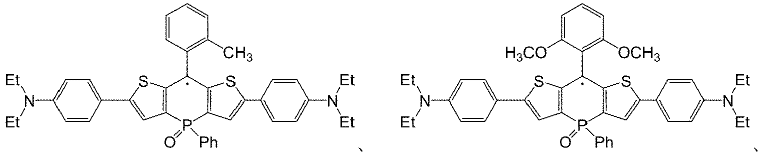 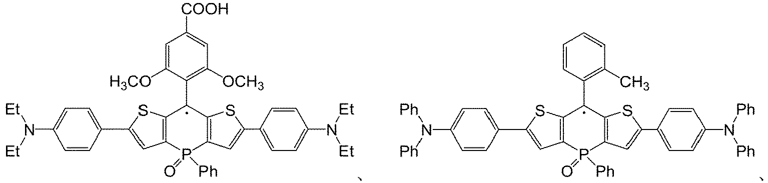 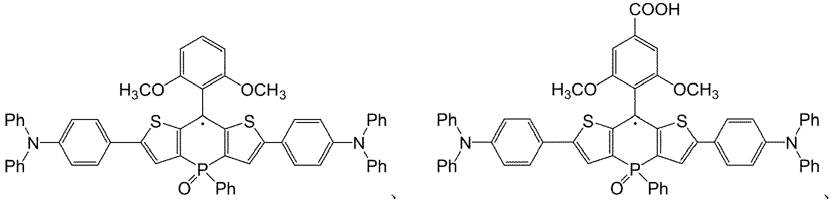 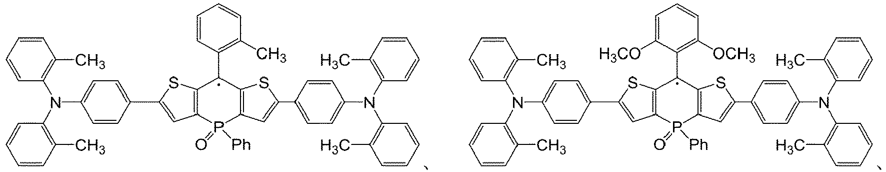 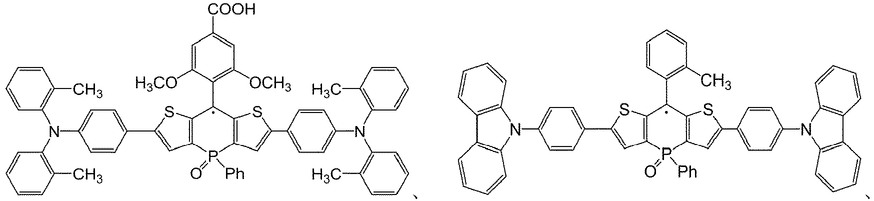 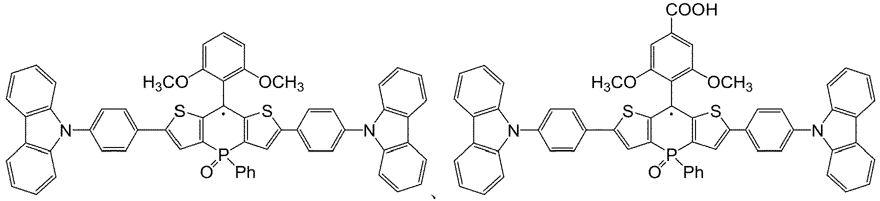 (wherein Ph represents phenyl and Et represents ethyl; the same applies below); preferably dithienophosphorine compounds represented by formulas: 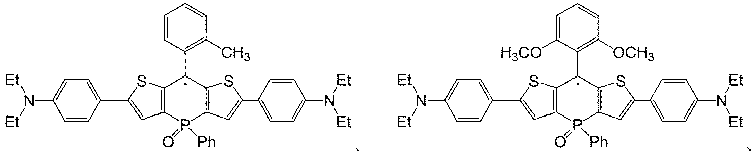 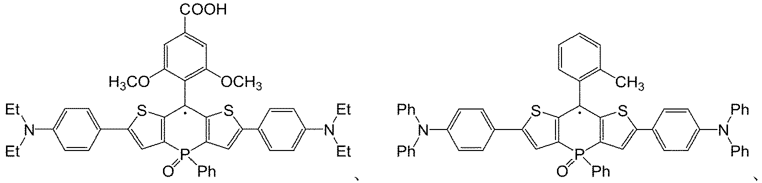 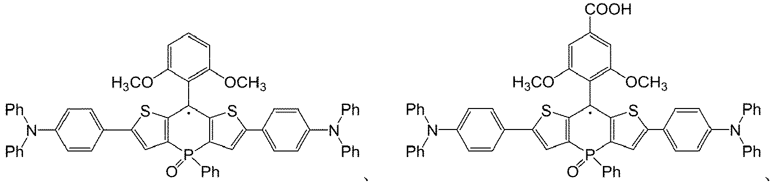 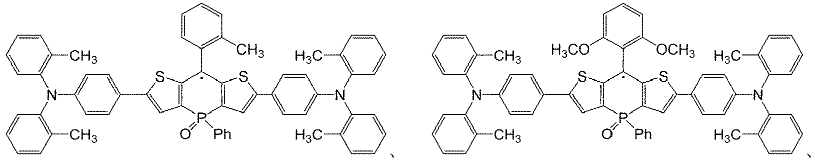 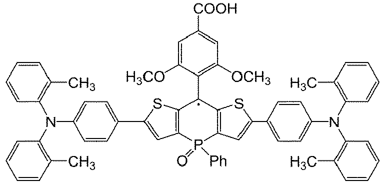 and more preferably dithienophosphorine compounds represented by formulas: 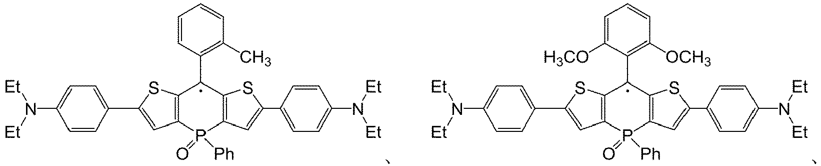 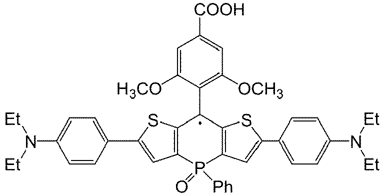 and the like.

Such dithienophosphorine compounds having a radical as described above do not have an absorption peaks in the near-infrared region. Specifically, such dithienophosphorine compounds can have a maximum absorption wavelength at 450 to 650 nm, in particular, 500 to 600 nm, in the visible light region, in a UV-Vis-NIR absorption spectrum. That is, unlike the dithienophosphorine compounds represented by formulas (1) and (1A), which are colorless and transparent in solutions, dithienophosphorine compounds represented by formula (2) can have a green color tone.

From the above, the dithienophosphorine compounds represented by formulas (1) and (1a), which are colorless and transparent, can be electrically reduced to dithienophosphorine compounds represented by formula (2) to thereby have a green color. Therefore, the dithienophosphorine compound of the present invention is also useful as an electrochromic material whose color tone is changed by application of electricity. Therefore, the dithienophosphorine compound of the present invention is useful for light-controlling windows (electronic curtains, sun control glass, etc.) used in aircrafts and other applications.

The dithienophosphorine compound of the present invention may also exist as a hydrate or a solvate, both of which are included within the scope of the present invention.

### 2. Method for Producing the Dithienophosphorine Compound

The dithienophosphorine compound of the present invention can be synthesized by various methods without limitation. For example, the dithienophosphorine compound of the present invention can be synthesized according to the following reaction scheme 1: 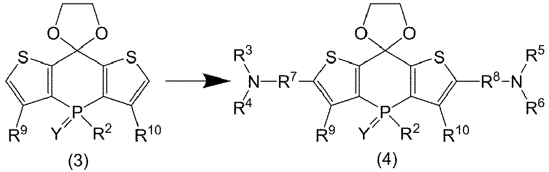 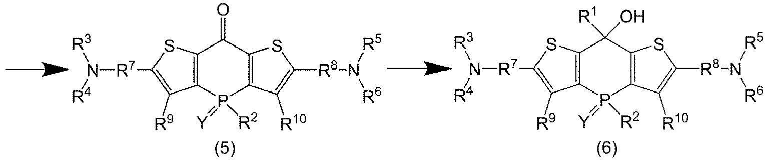 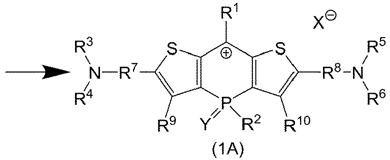 (wherein Y, R¹, R², R³, R⁴, R⁵, R⁶, R⁷, R⁸, R⁹, R¹⁰, and X⁻ are as defined above).

### (2-1) Compound (3) → Compound (4)

In this step, Compound (4) can be obtained by reacting Compound (3) with a compound represented by formula (7): 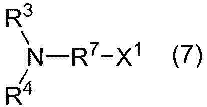 (wherein R³, R⁴, and R⁷ are the same as above and X¹ represents a halogen atom) in the presence of a palladium catalyst optionally with a ligand compound, carboxylic acid and a base. This reaction can be performed with reference to a previous report (J. Org. Chem. 2009, 74, 1826-1834).

Compound (3) can be synthesized according to, for example, a previous report (Angew. Chem. Int. Ed. 2013, 52, 8990-8994) .

The palladium catalyst is not particularly limited. Examples include palladium metals and other palladium compounds known as catalysts for the synthesis of organic compounds (including polymer compounds). Examples of usable palladium catalysts include compounds containing zerovalent palladium and compounds containing divalent palladium. When a compound containing divalent palladium is used, the divalent palladium is reduced to zerovalent palladium in the reaction system. Specific examples of usable palladium compounds include tetrakis(triphenylphosphine)palladium(0) (Pd(PPh₃)₄), tris(dibenzylideneacetone)dipalladium(0) (Pd₂(dba₃), bis(dibenzylideneacetone)palladium(0), bis(tri(tert-butyl)phosphine)palladium(0), palladium acetate (Pd(OA_{c})₂ (wherein Ac represents an acetyl group; the same applies below), and palladium halides (PdCl₂, PdBr₂, PdI₂), Pd(PPh₃)₂Cl₂ (wherein Ph represents a phenyl group; the same applies below). In the present invention, from the viewpoint of reaction yield etc., palladium catalysts containing divalent palladium are preferable, and palladium acetate is more preferable. Such palladium catalysts can be used singly or in a combination of two or more.

The amount of palladium catalyst used can be appropriately selected according to the type of substrate. In general, the palladium catalyst is preferably used, for example, in an amount of 0.01 to 1 mole, more preferably 0.02 to 0.5 moles, and even more preferably 0.03 to 0.3 moles, per mole of Compound (3) as a substrate. When multiple palladium catalysts are used, the total amount of palladium catalysts used is preferably adjusted to fall within the above range.

In the present invention, a ligand compound that can coordinate to a palladium atom can be used with the palladium catalyst. Although the reaction can proceed without using a ligand compound, the reaction yield can be further increased by using a ligand compound.

Such ligand compounds are preferably phosphine compounds having bulky alkyl groups. Examples include triisopropylphosphine, tri(tert-butyl)phosphine, tricyclopentylphosphine, tricyclohexylphosphine (PCy₃), di(tert-butyl)methylphosphine, n-butyldiadamantylphosphine (Pn-Bu(Ad)₂), and 2-dicyclohexylphosphino-2'-(N,N-dimethylamino)biphenyl (DavePhos). For stability, the ligand compound to be used can be in the form of a borate, such as tetrafluoroborate. Such ligand compounds may also be in the form of solvates. Such ligand compounds can be used singly or in a combination of two or more. Among these, tricyclohexylphosphine tetrafluoroborate (PCy₃HBF₄) is preferred from the viewpoint of reaction yield, etc.

From the viewpoint of reaction yield, etc., the amount of ligand compound used is preferably 0.1 to 20 moles, more preferably 0.5 to 10 moles, and even more preferably 1 to 5 moles, per mole of the palladium catalyst. When multiple ligand compounds are used, the total amount of the ligand compounds used is preferably adjusted to fall within the above range.

In the present invention, carboxylic acid can also be used as an additive. The use of carboxylic acid can further increase the reaction efficiency.

Examples of carboxylic acids include branched carboxylic acids such as pivalic acid, 1-methylcyclopropanecarboxylic acid, isobutyric acid, 2,2-dimethylbutyric acid, 2-methylmalonic acid, cyclohexanecarboxylic acid, 1-methyl-1-cyclohexanecarboxylic acid, and 1-adamantanecarboxylic acid; aromatic carboxylic acids such as 2,4,6-trimethylbenzoic acid and benzoic acid; and acetic acid. These carboxylic acids can be used singly or in a combination of two or more. Among these, from the viewpoints of yield and suppression of side reactions, the carboxylic acid to be used is preferably a branched carboxylic acid, more preferably pivalic acid, 1-methylcyclopropanecarboxylic acid, isobutyric acid, 2-methylmalonic acid, cyclohexanecarboxylic acid, 1-methyl-1-cyclohexanecarboxylic acid, or the like, and even more preferably pivalic acid.

When carboxylic acid is used, the amount of carboxylic acid used can be appropriately selected according to the type of substrate. For example, it is usually preferable that the amount of carboxylic acid is 0.1 to 2 moles, and more preferably 0.2 to 0.6 moles, per mole of Compound (3) as a substrate. When multiple carboxylic acids are used, the total amount of carboxylic acids used is preferably within the range described above.

From the viewpoint of allowing the reaction of the present invention to proceed more efficiently, the base to be used in the present invention is preferably an alkali metal carbonate, an alkali metal fluoride, an alkali metal phosphate, or the like. Not only strong bases but also weak bases can also be used as such bases to allow the reaction of the present invention to proceed efficiently. Examples of such bases include alkali metal phosphates such as lithium phosphate, sodium phosphate, and potassium phosphate; alkali metal carbonates such as lithium carbonate, sodium carbonate, potassium carbonate, and cesium carbonate; and alkali metal fluorides such as sodium fluoride, potassium fluoride, and cesium fluoride. Such bases can be used singly or in a combination of two or more. Among these, from the viewpoints of selectivity, yield, and safety, the base used in this step is preferably an alkali metal carbonate or an alkali metal fluoride, and more preferably lithium carbonate, sodium carbonate, potassium carbonate, cesium carbonate, or the like, and is even more preferably potassium carbonate.

In the present invention, from the viewpoints of selectivity and yield, the amount of base used is usually preferably 1 to 10 moles, and more preferably 2 to 8 moles, per mole of Compound (3) as a substrate.

The reaction can usually be carried out in the presence of a reaction solvent. Examples of reaction solvents include aliphatic hydrocarbons such as heptane and cyclohexane; aliphatic halogenated hydrocarbons such as dichloromethane, dichloroethane, chloroform, and carbon tetrachloride; and aromatic hydrocarbons such as benzene, toluene, xylene, mesitylene, and pentamethylbenzene; and chain ethers such as diisopropyl ether, dibutyl ether, dimethoxyethane, cyclopentyl methyl ether (CPME), and tert-butyl methyl ether; cyclic ethers such as tetrahydrofuran and dioxane; esters such as ethyl acetate, butyl acetate (AcOn-Bu), and ethyl propionate; alcohols such as 2-methyl-2-butanol (tert-amyl alcohol); and amides such as dimethylformamide, dimethylacetamide (DMA), 1,3-dimethyl-2-imidazolidinone, and N-methylpyrrolidone. Such solvents can be used singly or in a combination of two or more. Among these, in the present invention, amide is preferred and dimethylacetamide (DMA) is more preferred from the viewpoint of reaction yield etc.

The production method of the present invention is preferably carried out in an inert gas atmosphere (nitrogen gas, argon gas, etc.). The reaction temperature is usually preferably 50 to 200°C, and more preferably 80 to 150°C. The reaction time can be set so that the reaction sufficiently proceeds, and is usually preferably 1 to 48 hours, and more preferably 2 to 36 hours.

After completion of the reaction, the reaction product can be subjected to a usual isolation and purification step, if necessary, to thereby obtain Compound (4). Alternatively, the subsequent step can be performed without isolation and purification.

### (2-2) Compound (4) → Compound (5)

In this step, Compound (4) is reacted with an acid to obtain Compound (5).

Examples of acids include hydrogen chloride (hydrochloric acid), sulfuric acid, trifluoroacetic acid (TFA), trifluoroacetic anhydride, boron trifluoride-diethyl ether complex, and trifluoromethanesulfonic acid. Such acids can be used singly or in a combination of two or more. Among these, in the present invention, hydrogen chloride (hydrochloric acid) is preferred from the viewpoints of reaction yield and simplicity of experimental operation.

In the present invention, from the viewpoints of selectivity and yield, the amount of acid used is preferably 0.2 to 3.0 moles, and more preferably 0.5 to 1.5 moles, per mole of Compound (4) as a substrate. When the acid is a liquid, the acid is used in an excess amount, such as a solvent amount.

The reaction can usually be carried out in the presence of a reaction solvent. Examples of solvents that can be used include aliphatic hydrocarbons such as heptane and cyclohexane; aliphatic halogenated hydrocarbons such as dichloromethane, dichloroethane, chloroform, and carbon tetrachloride; aromatic hydrocarbons such as benzene, toluene, xylene, mesitylene, and pentamethylbenzene; and chain ethers such as diisopropyl ether, dibutyl ether, dimethoxyethane, cyclopentyl methyl ether (CPME), and tert-butyl methyl ether; and cyclic ethers such as tetrahydrofuran and dioxane. Such solvents can be used singly or in a combination of two or more. Among these solvents, in the present invention, aliphatic halogenated hydrocarbons are preferred and dichloromethane is more preferred from the viewpoint of reaction yield etc.

The production method of is preferably carried out under an inert gas atmosphere (e.g., nitrogen gas, argon gas, etc.). The reaction temperature is usually preferably -50 to 100°C, and more preferably 0 to 50°C. The reaction time can be set so that the reaction sufficiently proceeds, and is usually preferably 1 to 36 hours, and more preferably 2 to 24 hours.

After completion of the reaction, the reaction product can be subjected to a usual isolation and purification step, if necessary, to thereby obtain Compound (5). Alternatively, the subsequent step can be performed without isolation and purification.

### (2-3) Compound (5) → Compound (6)

In this step, after the compound represented by formula (8) :

R¹X² (8)

(wherein R¹ is as defined above and X² represents a halogen atom) is reacted with an organolithium compound, the resulting compound is reacted with Compound (5) to obtain Compound (6).

Examples of halogen atoms represented by X² in formula (8) include a chlorine atom, a bromine atom, and an iodine atom.

Examples of compounds represented by formula (8) include 2-chloro-1,3-dimethoxybenzene, 2-bromo-1,3-dimethoxybenzene, 2-iodo-1,3-dimethoxybenzene, 2-chlorotoluene, 2-bromotoluene, and 2-iodotoluene. Such compounds can be used singly or in a combination of two or more.

In the present invention, from the viewpoints of selectivity and yield, the amount of compound represented by formula (8) used is preferably 1.5 to 8 moles, and more preferably 2 to 5 moles, per mole of Compound (5) as a substrate.

Examples of organolithium compounds include alkyl lithium such as ethyl lithium, n-propyl lithium, isopropyl lithium, n-butyl lithium, sec-butyl lithium, tert-butyl lithium, pentyl lithium, and hexyl lithium; and cycloalkyl lithium such as cyclohexyl lithium. Such compounds can be used singly or in a combination of two or more. Among these compounds, alkyl lithium is preferred and sec-butyl lithium is more preferred from the viewpoint of yield.

In the present invention, the amount of organolithium compound used is preferably 0.5 to 3 moles, and more preferably 1 to 2 moles, per mole of the compound represented by formula (8), from the viewpoints of selectivity and yield.

The reaction can usually be carried out in the presence of a reaction solvent. Examples of usable reaction solvents include aliphatic hydrocarbons such as heptane and cyclohexane; aromatic hydrocarbons such as benzene, toluene, xylene, mesitylene, and pentamethylbenzene; chain ethers such as diisopropyl ether, dibutyl ether, dimethoxyethane, cyclopentyl methyl ether (CPME), and tert-butyl methyl ether; cyclic ethers such as tetrahydrofuran and dioxane. Such solvents can be used singly or in a combination of two or more. Among these, in the present invention, chain ethers are preferred and cyclopentyl methyl ether (CPME) is more preferred from the viewpoint of reaction yield etc.

The production method of the present invention is preferably carried out in an inert gas atmosphere (e.g., nitrogen gas, argon gas, etc.). The reaction temperature is usually preferably -150 to 0°C, and more preferably -100 to -50°C. The reaction time can be set so that the reaction sufficiently proceeds, and is usually preferably 10 minutes to 24 hours, and more preferably 30 minutes to 12 hours.

After completion of the reaction, the reaction product can be subjected to a usual isolation and purification step, if necessary, to thereby obtain Compound (6). Alternatively, the subsequent step can be performed without isolation and purification.

### (2-4) Compound (6) → Compound (1A)

In this step, an acid represented by formula (9):

HX (9)

(wherein X represents a residue to which an electron has been transferred from the anion represented by X⁻ above) is reacted with Compound (6) to obtain Compound (1A), which is a dithienophosphorine compound of the present invention.

In formula (9), X is a residue to which an electron has been transferred from the anion represented by X⁻ above. Accordingly, specific examples of X include halogen atoms (e.g., fluorine atom, chlorine atom, bromine atom, and iodine atom), trifluoroacetyl, trifluoromethanesulfonyl, tetrafluoroborate (BF₄), and hexafluorophosphate (PF₆).

Examples of acids represented by formula (9) include hydrogen halides (e.g., hydrogen fluoride, hydrogen chloride, hydrogen bromide, and hydrogen iodide), trifluoroacetic acid, trifluoromethanesulfonic acid, tetrafluoroboric acid (HBF₄), and hexafluorophosphoric acid (HPF₆). Such acids can be used singly or in a combination of two or more.

In the present invention, the amount of acid represented by formula (9) is preferably 0.2 to 3.0 moles, and more preferably 0.5 to 2 moles, per mole of the substrate compound (6), from the viewpoints of selectivity and yield. When the acid is a liquid, the acid can be used in an excess amount, such as a solvent amount.

The production method of the present invention is preferably carried out in an inert gas atmosphere (e.g., nitrogen gas, argon gas, etc.). The reaction temperature is usually preferably -50 to 100°C, and more preferably 0 to 50°C. The reaction time can be set so that the reaction sufficiently proceeds, and is usually preferably 1 to 48 hours, and more preferably 2 to 36 hours.

After completion of the reaction, the reaction product can be subjected to a usual isolation and purification step, if necessary, to thereby obtain the dithienophosphorine compound of the present invention.

### Examples

The present invention is specifically described below with reference to Examples. However, the present invention is not limited to these Examples.

### General Operation

The melting point (m.p.) or decomposition temperature was measured with a Yanaco MP-S3 instrument. ¹H NMR, ¹³C NMR, and ³¹P{¹H} NMR spectra were measured in heavy chloroform (CDCl₃) and heavy dichloromethane (CD₂Cl₂) using a Bruker AVANCE III 500 USP spectrometer (500 MHz for ¹H, 125 MHz for ¹³C, 202 MHz for ³¹P). The chemical shift values in the ¹H NMR spectrum were determined by using residual proton signals of chloroform (CHCl₃) and dichloromethane (CH₂Cl₂) (δ 7.26 ppm and 5.32 ppm, respectively) as internal standards. The chemical shift values of the ¹³C NMR spectrum were determined by using signals of residual protons of heavy chloroform (CDCl₃) and heavy dichloromethane (CD₂C₁₂) (δ 77.16 ppm and 53.84 ppm, respectively) as internal standards. The chemical shift value in the ³¹P NMR spectrum was determined by using H₃PO₄ signal (0.00 ppm) as an external standard. Mass spectra were measured by electrospray ionization (ESI) method using a solariX Fourier transform ion cyclotron resonance (FT-ICR) mass spectrometer. Electron paramagnetic resonance (EPR) spectra were measured in toluene degassed by a freeze-pump-thaw cycle before measurement, in a sealed tube, using a JEOL JES-FA 200 ESR spectrometer. Thin layer chromatography (TLC) was performed on plates coated with 0.25-mm thick silica gel 60F₂₅₄ (Merck). Silica gel PSQ60B (Fuji Silysia Chemical Co., Ltd.) or Florisil (Fujifilm Wako Pure Chemicals Co., Ltd.) was used for column chromatography. Unless otherwise stated, all reactions were performed in a nitrogen atmosphere. Anhydrous diethyl ether (Et₂O) and tetrahydrofuran (THF) were purchased from Kanto Chemical Co., Inc. and purified by the Glass Contour Solvent System. Anhydrous cyclopentyl methyl ether (CPME) and anhydrous N,N-dimethylacetamide (DMA) were purchased from Kanto Chemical Co., Inc. 2,2-Bis{3-bromothiophen-2-yl}-1,3-dioxolane and tert-butyl 4-bromo-3,5-dimethoxybenzoate were prepared according to previous reports. Unless otherwise specified, all solvents and reagents were commercially available.

### Synthesis Example 1: 4-phenylspiro{phosphinino[3,2-b:5,6-b']dithiophen-8,2'-(1,3)dioxolane}P-oxide (Compound S2)

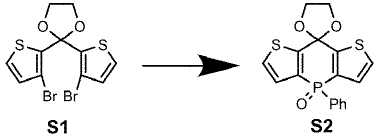

wherein Ph represents phenyl.

A solution of n-butyl lithium (n-BuLi) in hexane (1.60M, 58.5 mL, 93.6 mmol) was added to a solution of 2,2-bis{3-bromothiophen-2-yl}-1,3-dioxolane (17.2 g, 43.4 mmol) in anhydrous tetrahydrofuran/diethyl ether (THF/Et₂O; 1:3, 1200 mL) at -78°C over a period of 30 minutes or more. After stirring for 2 hours, dichlorophenylphosphine (PhPCl₂; 6.40 mL, 47.2 mmol) in anhydrous diethyl ether (anhydrous Et₂O; 78 mL) was slowly added over a period of 1 hour or more. The solution was washed with 20 mL of diethyl ether (Et₂O). After stirring at -78°C for another 2 hours, a 30% H₂O₂ solution (30 mL) was added dropwise and the resulting mixture was heated to room temperature. The obtained mixture was stirred for another 1 hour and then quenched with an aqueous saturated Na₂SO₃ solution. The solvent was partially removed and washed with distilled water. The aqueous layer was extracted three times with CH₂Cl₂. The combined organic layers were dried over anhydrous Na₂SO₄ and concentrated under reduced pressure. The residue was purified by silica gel column chromatography (CH₂Cl₂/AcOEt = 100/0 to 50/50; AcOEt is ethyl acetate) to give 11.4 g (31.6 mmol, 73%) of Compound S2 as a white solid.
Melting point: 150.0°C.
¹H NMR (500 MHz, CDCl₃): δ 7.78 (dd, J = 13.5 Hz, 7.0 Hz, 2H), 7.49-7.39 (m, 5H), 7.33 (t, J = 5.0 Hz, 2H), 4.46 (t, J = 6.0 Hz, 2H), 4.36 (t, J = 6.0 Hz, 2H).
¹³C NMR (125 MHz, CDCl1₃) : δ 152.0 (d, J_{CP} = 10.9 Hz, C), 132.8 (d, J_{CP} = 105.6 Hz, C), 132.4 (d, J_{CP} = 111.9 Hz, C), 132.0 (d, J_{CP} = 3.6 Hz, CH), 131.2 (d, J_{CP} = 10.9 Hz, CH), 128.8 (d, J c^{p} = 13.6 Hz, CH), 128.1 (d, J_{CP} = 9.0 Hz, CH), 128.0 (d, J_{CP} = 12.6 Hz, CH), 101.9 (d, J_{CP} = 5.4 Hz, C), 67.4 (s, CH₂), 65.4 (s, CH₂) . ³¹P{¹H} NMR (202 MHz, CDC1₃) : δ 3.1.
HRMS (ESI): m/z calcd. for C₁₇H₁₄O₃PS₂: 361.0116 (M+H⁺). Obsd. 361.0115.

### Synthesis Example 2: 2,6-bis{4-[diphenylamino]phenyl}-4-phenylspiro{phosphinino[3,2-b:5,6-b']dithiophen-8,2'-(1,3)dioxolane}P-oxide (Compound 1)

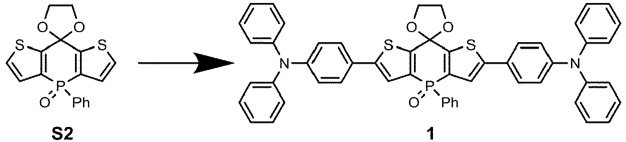

wherein Ph represents phenyl.

4-Phenylspiro{phosphinino[3,2-b:5,6-b']dithiophen-8,2'-(1,3)dioxolane}P-oxide (Compound S2; 1.23 g, 3.41 mmol), 4-bromotriphenylamine (4.41 g, 13.6 mmol), palladium acetate (Pd(OAc)₂; 78.2 mg, 0.348 mmol), tricyclohexylphosphine tetrafluoroborate (PCy₃HBF₄; 259 mg, 0.702 mmol), pivalic acid (213 mg, 2.08 mmol), and potassium carbonate (K₂CO₃; 1.89 g, 13.7 mmol) were added to a heat-dried 200-mL two-necked flask and dissolved in anhydrous N,N-dimethylacetamide (anhydrous DMA; 85 mL). The reaction mixture was heated to 100°C and stirred for 19 hours. After cooling the mixture to room temperature, the solvent was removed under vacuum. The solid was dissolved in CH₂Cl₂ and washed with an aqueous saturated NH₄Cl solution. The aqueous layer was extracted three times with dichloromethane (CH₂Cl₂; 50 mL each). The combined organic layers were washed with saturated brine, dried over anhydrous sodium sulfate (Na₂SO₄), and concentrated under reduced pressure. The residue was purified by silica gel column chromatography (CHCl₃, R_{f} = 0.17) to give 2.81 g (3.31 mmol, yield: 97%) of Compound 1 as a brown solid.
Melting point: 170.9 to 171.6°C.
¹H NMR (500 MHz, CD₂Cl₂): δ7.80 (dd, J = 13.5 Hz, 7.5 Hz, 2H), 7.50 (t, J = 7.5 Hz, 1H), 7.45-7.43 (overlapped t, 2H), 7.44 (d, J = 8.5 Hz, 4H), 7.35 (d, J = 4.5 Hz, 2H), 7.28 (td, J = 8.0 Hz, 1.0 Hz, 8H), 7.10 (dd, J = 8.0 Hz, 1.0 Hz, 8H), 7.07 (tt, J = 7.5 Hz, 1.0 Hz, 4H), 7.01 Hz (d, J = 8.5 Hz, 4H), 4.47 (t, J = 6.0 Hz, 2H), 4.40 (t, J = 6.0 Hz, 2H).
¹³C NMR (125 MHz, CD₂Cl₂) : δ 149.7 (d, J_{CP} = 10.0 Hz, C), 148.8 (s, C), 147.7 (d, J c^{p} = 14.5 Hz, C), 147.6 (s, C), 134.2 (d, J c^{p} = 104.6 Hz, C), 133.1 (d, J_{CP} = 112.2 Hz, C), 132.3 (s, CH), 131.4 (d, J_{CP} = 11.7 Hz, CH), 129.8 (s, CH), 129.1 (d, J_{CP} = 12.6 Hz, CH), 127.3 (s, CH), 126.7 (s, C), 125.4 (s, CH), 124.0 (s, CH), 123.2 (s, CH), 122.2 (d, J_{CP} = 11.7 Hz, CH), 102.1 (d, J c^{p} = 5.7 Hz, C), 67.7 (s, CH₂), 66.0 (s, CH₂).
³¹P{¹H} NMR (202 MHz, CDCl₃): δ1.3.
HRMS (ESI): m/z calcd. for C₅₃H₄₀N₂O₃PS₂: 847.2212 (M+H⁺) . Obsd. 847.2209.

### Synthesis Example 3: 2,6-bis{4-[diphenylamino]phenyl}-4-phenyl-8H-phosphinino{3,2-b:5,6-b'}dithiophen-8-one P-oxide (Compound 2)

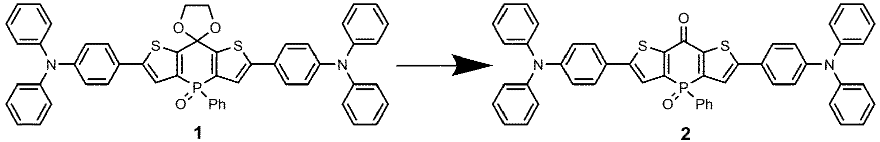

wherein Ph represents phenyl.

In a 300-mL round-bottom flask, Compound 1 (8.89 g, 10.5 mmol) obtained in Synthesis Example 2 was dissolved in 150 mL of CH₂CI₂. 25 mL of concentrated hydrochloric acid was added to the round-bottom flask and the reaction mixture was stirred for 14 hours. The reaction was quenched with 50 mL of ice water. Subsequently, the aqueous layer was extracted three times with CH₂Cl₂ (100 mL each). The combined organic layers were washed with saturated brine, dried over anhydrous magnesium sulfate (MgSO₄), and concentrated under reduced pressure. The residue was purified by silica gel column chromatography (CHCI₃, Rf = 0.15) to give 8.43 g (10.5 mmol, yield: 100%) of Compound 2 as a dark purple solid.
Melting point: 177.2 to 178.0°C.
¹H NMR (500 MHz, CDCl₃): δ 7.75 (dd, J = 13.5 Hz, 8.0 Hz, 2H), 7.54 (td, J = 7.5 Hz, 1H), 7.50-7.44 (overlapped t, 2H), 7.50 (d, J = 5.0 Hz, 2H), 7.48 (d, J = 8.5 Hz, 4H), 7.29 (t, J = 7.5 Hz, 8H), 7.12 (d, J = 8.5 Hz, 8H), 7.09 (t, J = 7.5 Hz, 4H), 7.03 (d, J = 8.5 Hz, 4H).
¹³C NMR (125 MHz, CDCl₃): δ 171.9 (d, J_{CP} = 5.5 Hz, C), 155.2 (d, J_{CP} = 15.4 Hz, C), 149.7 (s, C), 147.0 (s, C), 143.2 (d, J_{CP} = 9.9 Hz, C), 140.6 (d, J_{CP} = 101.0 Hz, C), 132.8 (s, CH), 131.1 (d, J_{CP} = 10.7 Hz, CH), 130.9 (d, J_{CP} = 112.1 Hz, C), 129.7 (s, CH), 129.2 (d, J_{CP} = 12.6 Hz, CH), 127.5 (s, CH), 125.4 (s, CH), 125.3 (s, C), 124.3 (d, J c^{p} = 16.2 Hz, CH), 124.2 (s, CH), 122.3 (s, CH) . ³¹P{¹H} NMR (202 MHz, CDC1₃) : δ 1.8.
HRMS (ESI) : m/z calcd. for C₅₁H₃₆N₂O₂PS₂: 803.1950 (M+H⁺) . Obsd. 803.1950

### Synthesis Example 4: 8-{2,6-dimethoxyphenyl}-2,6-bis{4-[diphenylamino]phenyl}-8-hydroxy-4-phenyl-8H-phosphinino {3,2-b:5,6-b'}dithiophene P-oxide (Compound 3)

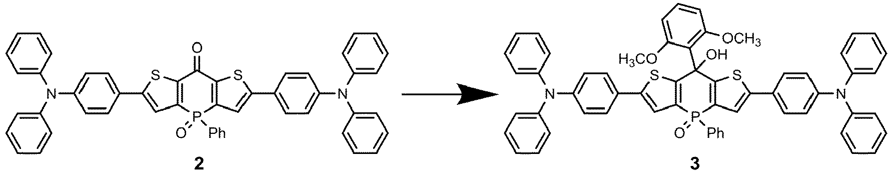

wherein Ph represents phenyl.

In a heat-dried 500-mL three-necked round-bottom flask, 2-bromo-1,3-dimethoxybenzene (3.19 g, 14.7 mmol) was dissolved in anhydrous cyclopentyl methyl ether (anhydrous CPME; 100 mL).

After cooling to -78°C, sec-butyl lithium (1.00 M in cyclohexane and n-hexane, 17.0 mL, 17.0 mmol) was added dropwise over 15 minutes. The resulting mixture was stirred at the same temperature for 2 hours. Subsequently, the solution of Compound 2 (3.33 g, 4.15 mmol) obtained in Synthesis Example 3 in anhydrous CPME (80 mL) was added dropwise via a dropping funnel over a period of 75 minutes. The mixture was further washed with 10 mL of anhydrous cyclopentyl methyl ether (CPME), and the resulting mixture was stirred at -78°C for 4 hours. The flask was opened to atmosphere and the mixture was concentrated under reduced pressure. The resulting solid was dissolved in 50 mL CH₂Cl₂ and washed with an aqueous saturated NH₄CI solution (100 mL). The aqueous layer was further extracted three times with CH₂Cl₂ (50 mL each). The combined organic layers were washed with saturated brine, dried over anhydrous Na₂SO₄, and the solvent was removed under vacuum. The residue was purified by silica gel column chromatography (CH₂Cl₂/AcOEt = 100/0 to 10/1; wherein AcOEt is ethyl acetate) to give 2.42 g (2.57 mmol, yield: 62%) of Compound 3 as a brown solid.
Melting point: 188.7 to 189.7°C.
¹H NMR (500 MHz, CD₂Cl₂): δ 7.81 (dd, J = 12.8 Hz, 7.6 Hz, 2H), 7.54-7.51 (m, 1H), 7.46 (td, J = 7.6 Hz, 2.8 Hz, 2H), 7.39 (t, J = 8.4 Hz, 1H), 7.35 (d, J = 8.8 Hz, 4H), 7.25 (t, J = 8.0 Hz, 8H), 7.19 (d, J = 4.4 Hz, 2H), 7.06 (d, J = 7.6 Hz, 8H), 7.04 (t, J = 7.2 Hz, 4H), 6.96 (d, J = 8.8 Hz, 4H), 6.73 (d, J = 8.8 Hz, 2H), 3.66 (s, 6H).
¹³C NMR (125 MHz, CD₂Cl₂): δ 158.6 (d, J_{CP} = 10.1 Hz, C), 158.4 (s, C), 148.3 (s, C), 147.7 (s, C), 145.1 (d, J_{CP} = 15.5 Hz, C), 134.4 (d, J_{CP} = 111.7 Hz, C), 132.1 (s, CH), 131.8 (d, J_{CP} = 10.9 Hz, CH), 130.8 (s, CH), 129.7 (s, CH), 129.5 (d, J_{CP} = 106.5 Hz, C), 128.8 (d, J_{CP} = 12.7 Hz, CH), 127.3 (s, C), 127.1 (s, CH), 125.1 (s, CH) , 123.7 (s, CH), 123.4 (s, CH), 121.7 (d, J_{CP} = 12.7 Hz, CH), 121.4 (s, C), 106.9 (s, CH), 73.1 (d, J c^{p} = 5.5 Hz, C), 57.0 (s, CH₃).
³¹P{¹H} NMR (202 MHz, CD₂Cl₂): δ 0.9.
HRMS (ESI): m/z calcd. for C₅₉H₄₆N₂O₄PS₂: 941.2631 (M+H⁺) . Obsd. 941.2624.

### Example 1: 8-{2,6-dimethoxyphenyl}-2,6-bis{4-[diphenylamino]phenyl}-4-phenyl-8H-phosphinino {3,2-b:5,6-b'}dithiophen-8-ylium P-oxide 2,2,2-trifluoroacetate (Compound 4)

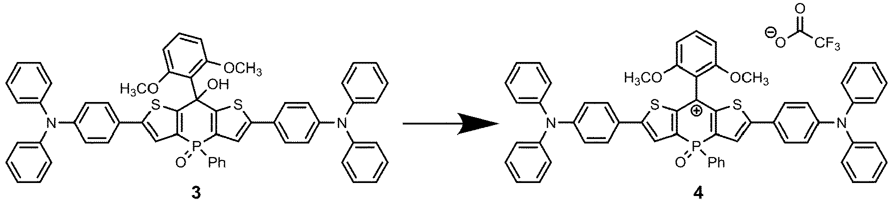

wherein Ph represents phenyl.

0.18 mL of trifluoroacetic acid (TFA) was added dropwise to a solution of Compound 3 (110 mg, 0.117 mmol) obtained in Synthesis Example 4 in CH₂Cl₂ (4 mL). The resulting solution was stirred overnight. Subsequently, the solution was washed with a 2M aqueous trifluoroacetic acid (TFA) solution (10 mL) and the obtained aqueous solution was extracted three times with CH₂Cl₂ (10 mL each). The combined organic layers were dried over anhydrous Na₂SO₄. After the solvent was removed under reduced pressure, the residue was recrystallized by a two-layer diffusion method using CH₂Cl₂ and hexane. The resulting crystals were filtered off, washed further with a small amount of hexane, and dried in vacuum to give 114 mg (0.110 mmol, yield: 94%) of Compound 4 as a dark green solid.
Melting point: 195.1 to 196.0°C.
¹H NMR (500 MHz, CDCl₃): δ 7.99 (d, J = 6.4 Hz, 2H), 7.83 (dd, J = 14.0 Hz, 7.6 Hz, 2H), 7.68 (t, J = 7.0 Hz, 1H), 7.62-7.53 (m, 7H), 7.38 (t, J = 7.5 Hz, 8H), 7.26 (overlapped t, 4H), 7.17 (d, J = 7.5 Hz, 8H), 6.93 (d, J = 9.2 Hz, 4H), 6.82 (d, J = 7.5 Hz, 1H), 6.78 (d, J = 7.50 Hz, 1H), 3.87 (s, 3H), 3.83 (s, 3H).
³¹P{¹H} NMR (202 MHz, CDC1₃) : δ 5.4.
HRMS (ESI): m/z calcd. for C₅₉H₄₄N₂O₃PS₂: 923.2525 (M⁺). Obsd. 923.2526.

### Synthesis Example 5: 2,6-Bis{4-[diethylamino]phenyl}-4-phenylspiro{phosphinino[3,2-b:5,6-b']dithiophen-8,2'-(1,3)dioxolane}P-oxide (Compound 5)

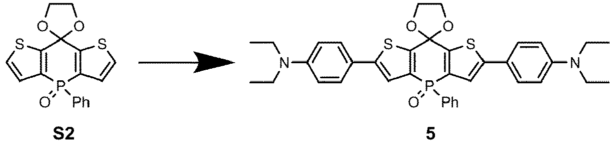

wherein Ph represents phenyl.

4-Phenylspiro{phosphinino[3,2-b:5,6-b']dithiophen-8,2'-(1,3)dioxolane}P-oxide (Compound S1; 1.01 g, 2.80 mmol), 4-bromo-N,N-diethylaniline (1.97 g, 8.64 mmol), palladium acetate (Pd(OAc)₂; 65.7 mg, 0.293 mmol), tricyclohexylphosphine tetrafluoroborate (PCy₃HBF₄; 216 mg, 0.588 mmol), pivalic acid (180 mg, 1.76 mmol), and potassium carbonate (K₂CO₃; 1.55 g, 11.2 mmol) were added to 200 mL of a heat-dried two-necked flask and dissolved in anhydrous N,N-dimethylacetamide (anhydrous DMA; 60 mL). The reaction mixture was heated to 120°C and stirred for 13 hours. After cooling the mixture to room temperature, the solvent was removed under vacuum. The solid was dissolved in CH₂Cl₂ and washed with an aqueous saturated NH₄CI solution. The aqueous layer was extracted three times with CH₂CI₂. The combined organic layers were washed with saturated brine, dried over anhydrous Na₂SO₄, and concentrated under reduced pressure. The residue was purified by silica gel column chromatography (CHCI₃, 2% triethylamine, R_{f} = 0.20) to give 1.72 g (2.63 mmol, yield: 94%) of Compound 3 as a brown solid.
Melting point: 283.9 to 284.9°C.
¹H NMR (500 MHz, CD₂Cl₂): δ 7.81 (ddd, J = 13.7 Hz, 7.7 Hz, 1.5 Hz, 2H), 7.51-7.42 (overlapped m, 7H), 7.24 (d, J = 4.5 Hz, 2H), 6.65 (d, J = 8.50 Hz, 4H), 4.47 (t, J = 5.0 Hz, 2H), 4.40 (t, J = 5.0 Hz, 2H), 3.37 (q, J = 7.5 Hz, 8H), 1.16 (t, J = 7.0 Hz, 12H). ¹³C NMR (125 MHz, CD₂Cl₂): δ 148.9 (d, J_{CP} = 15.4 Hz, C), 148.5 (s, C), 148.1 (d, J c^{p} = 9.0 Hz, C), 134.0 (d, J c^{p} = 104.6 Hz, C), 133.6 (d, J c^{p} = 111.0 Hz, C), 132.1 (s, CH), 131.4 (d, J_{CP} = 10.7 Hz, CH), 129.0 (d, J c^{p} = 12.6 Hz, CH), 127.6 (s, CH), 120.1 (d, J_{CP} = 10.8 Hz, CH), 120.1 (s, C), 111.9 (s, CH), 102.2 (d, J_{CP} = 5.1 Hz, C), 67.6 (s, CH₂), 65.9 (s, CH₂), 44.8 (s, CH₂), 12.7 (s, CH₃). ³¹P{¹H} NMR (202 MHz, CD₂Cl₂): δ 0.7.
HRMS (ESI) : m/z calcd. for C₃₇H₄₀N₂O₃PS₂: 655.2212 (M+H⁺) . Obsd. 655.2205.

### Synthesis Example 6: 2,6-bis{4-[diethylamino]phenyl}-4-phenyl-8H-phosphinino{3,2-b:5,6-b'}dithiophen-8-one P-oxide (Compound 6)

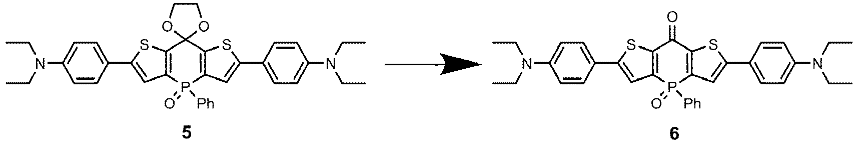

wherein Ph represents phenyl.

In a 100-mL round-bottom flask, Compound 5 (1.72 g, 2.63 mmol) obtained in Synthesis Example 5 was dissolved in 50 mL of CH₂Cl₂. 4.4 mL concentrated HCl was added to the round-bottom flask, and the reaction mixture was stirred for 1 hour. The reaction was quenched with an aqueous saturated NaHCO₃ solution and neutralization was performed. Subsequently, the aqueous layer was extracted three times with CHCl₃. The combined organic layers were dried over anhydrous Na₂SO₄ and concentrated under reduced pressure. The residue was purified by silica gel column chromatography (CHCl₃, 10% triethylamine, R_{f} = 0.64) to give 1.60 g (2.62 mmol, yield: 99%) of Compound 6 as a dark purple solid. Melting point: > 300°C
¹H NMR (500 MHz, CD₂Cl₂): δ 7.74 (ddd, J = 13.7 Hz, 7.0 Hz, 1.5 Hz, 2H), 7.56-7.51 (overlapped m, 5H), 7.46 (td, J = 7.2 Hz, 3.5 Hz, 2H), 7.42 (d, J = 4.5 Hz, 2H), 6.67 (broad s, 4H), 3.39 (q, J = 7.0 Hz, 8H), 1.18 (d, J = 7.0 Hz, 12H).
³¹P{¹H} NMR (202 MHz, CD₂Cl₂): δ 0.8.
HRMS (ESI): m/z calcd. for C₃₅H₃₆N₂O₂PS₂: 611.1950 (M+H⁺) . Obsd. 611.1946.

### Synthesis Example 7: 2,6-bis{4-[diethylamino]phenyl}-8-{2,6-dimethoxyphenyl}-8-hydroxy-4-phenyl-8H-phosphinino{3,2-b:5,6-b'}dithiophene P-oxide (Compound 7)

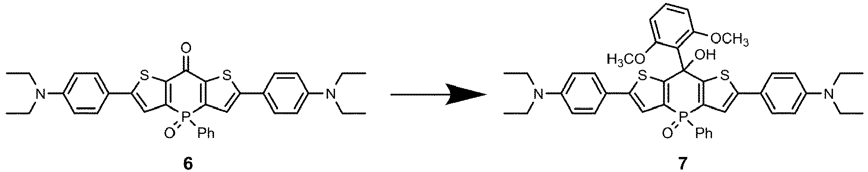

wherein Ph represents phenyl.

In a heat-dried 50-mL two-necked round-bottom flask, 2-bromo-1,3-dimethoxybenzene (1.18 g, 5.45 mmol) was dissolved in anhydrous CPME (9.7 mL). After cooling to -78°C, sec-butyl lithium (1.05M in cyclohexane and n-hexane, 5.45 mL, 5.72 mmol) was added dropwise over a period of 10 minutes. The reaction mixture was stirred at the same temperature for 1.5 hours. Subsequently, a suspension of Compound 6 (550 mg, 0.90 mmol) obtained in Synthesis Example 6 in anhydrous cyclopentyl methyl ether (anhydrous CPME; 26 mL) was added dropwise through a dropping funnel over a period of 30 minutes. The mixture was further washed with 8 mL of anhydrous cyclopentyl methyl ether (CPME) and the temperature of the resulting mixture was immediately raised to room temperature. The mixture was stirred for 22 hours. The flask was opened to atmosphere and the solvent was removed under reduced pressure. The resulting solid was dissolved in CH₂Cl₂ and washed with saturated NH₄Cl solution. The aqueous layer was further extracted with CH₂Cl₂ three times. The combined organic layers were washed with saturated brine and dried over anhydrous Na₂SO₄. After concentration under vacuum, the obtained product was isolated by silica gel column chromatography (toluene/CH₂Cl₂ = 100/0 to 0/100, triethylamine held constant at 3%) to give 236 mg (0.315 mmol, 35% yield) of Compound 7 as a brown solid.
Melting point: 257.0 to 258.0°C.
¹H NMR (500 MHz, CD₂Cl₂): δ 7.83 (dd, J = 13.2 Hz, 7.6 Hz, 2H), 7.52 (t, J = 7.0 Hz, 1H), 7.47 (t, J = 8.0 Hz, 2H), 7.43 (broad s, 1H), 7.39 (t, J = 8.5 Hz, 1H), 7.33 (d, J = 8.7 Hz, 4H), 7.08 (d, J = 4.5 Hz, 2H), 6.74 (d, J = 8.4 Hz, 2H), 6.59 (d, J = 8.8 Hz, 4H), 3.67 (s, 6H), 3.34 (q, J = 7.0 Hz, 8H), 1.13 (t, J = 7.0 Hz, 12H).
¹³C NMR (125 MHz, CD₂Cl₂): δ 158.5 (s, C) , 157.0 (d, J_{CP} = 8.1 Hz, C) , 148.1 (s, C), 146.3 (d, J c^{p} = 15.4 Hz, C), 134.8 (d, J c^{p} = 111.1 Hz, C), 132.0 (s, CH), 131.9 (d, J_{CP} = 10.7 Hz, CH), 130.6 (s, CH), 129.3 (d, J_{CP} = 107.5 Hz, C), 128.7 (d, J_{CP} = 12.7 Hz, CH), 127.4 (s, CH), 121.8 (s, C), 120.6 (s, C), 119.6 (d, J c^{p} = 12.7 Hz, CH), 118.9 (s, CH), 106.9 (s, CH), 73.1 (d, J c^{p} = 5.4 Hz, C), 57.0 (s, CH₃), 44.7 (s, CH₂), 12.7 (s, CH₃).
³¹P{¹H} NMR (202 MHz, CD₂Cl₂): δ 1.0.
HRMS (ESI) : m/z calcd. for C₄₃H₄₆N₂O₄PS₂: 749.2631 (M+H⁺) . Obsd. 749.2628.

### Example 2: 2,6-bis{4-[diethylamino]phenyl}-8-{2,6-dimethoxyphenyl}-4-phenyl-8H-phosphinino{3,2-b:5,6-b'}dithiophen-8-ylium P-oxide 2,2,2-trifluoroacetate (Compound 8)

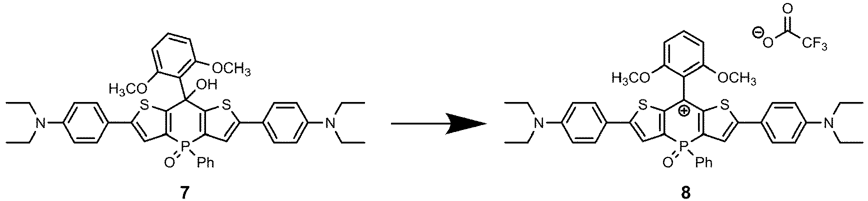

wherein Ph represents phenyl.

0.37 mL trifluoroacetic acid (TFA) was added dropwise to a solution of Compound 7 (182 mg, 0.243 mmol) obtained in Synthesis Example 7 in CH₂Cl₂ (8 mL). The resulting solution was stirred overnight. Subsequently, the solution was washed with a 5M aqueous trifluoroacetic acid (TFA) solution (10 mL) and the resulting aqueous solution was extracted three times with CH₂Cl₂ (10 mL each). The combined organic layers were dried over anhydrous Na₂SO₄. After the solvent was removed under reduced pressure, diethyl ether was added dropwise to a solution of the resulting residue in CH₂Cl₂/MeOH (9/1; MeOH represents methanol) and the resulting mixture was sonicated and washed to give 140 mg (0.166 mmol, yield: 68%) of Compound 8 as a dark solid.
Melting point: > 300.0°C.
¹H NMR (500 MHz, CDCl₃): δ 7.91 (broad, 2H), 7.85 (dd, J = 13.5 Hz, 7.5 Hz, 2H), 7.64-7.54 (m, 8H), 7.05 (broad, 3H), 6.80 (d, J = 8.0 Hz, 1H), 6.79 (d, J = 8.0 Hz, 1H), 3.87 (s, 3H), 3.83 (s, 3H), 3.58 (broad, 8H), 1.27 (t, J = 7.0 Hz, 12H).
³¹P{¹H} NMR (202 MHz, CDC1₃) : δ 5.2.
HRMS (ESI) : m/z calcd. for C₄₃H₄₄N₂O₃PS₂: 731.2525 (M⁺). Obsd. 731.2523.

### Example 3: 8-{2,6-dimethoxyphenyl}-2,6-bis{4-[diphenylamino]phenyl}-4-phenyl-8H-phosphinino{3,2-b:5,6-b'}dithiophen-8-ylium P-oxide radical (Compound 4.)

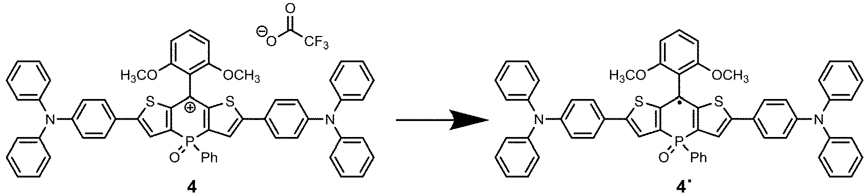

wherein Ph represents phenyl.

In a heat-dried Schlenk flask, a solution of decamethylferrocene (25.6 mg, 78.4 µmol) in tetrahydrofuran (THF; 0.5 mL) was added dropwise to a solution of Compound 4 (71.2 mg, 68.6 µmol) obtained in Example 1 in tetrahydrofuran (THF; 0.5 mL). Subsequently, the resulting mixture was stirred for 1 hour. The solvent was then removed under reduced pressure. Subsequently, the residue was purified by Florisil column chromatography (CH₂Cl₂/AcOEt = 10/1, Rf = 0.25; AcOEt represents ethyl acetate) to give 34.9 mg (37.7 µmol, yield: 55%) of Compound 4. as a purple solid.

### Synthesis Example 8: 4-{2,6-bis[4-(diphenylamino)phenyl]-8-hydroxy-P-oxido-4-phenyl-8H-phosphinino[3,2-b:5,6-b']dithiophen-8-yl}-3,5-dimethoxybenzoate (Compound 9)

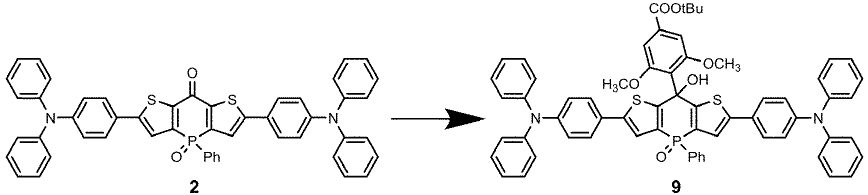

wherein Ph represents phenyl and tBu represents tert-butyl.

In a heat-dried 100-mL two-necked round-bottom flask, tert-butyl 4-bromo-3,5-dimethoxybenzoate (1.30 g, 4.09 mmol) was dissolved in anhydrous cyclopentyl methyl ether (anhydrous CPME; 13.5 mL). After cooling to -78°C, sec-butyl lithium (1.05M in cyclohexane and n-hexane, 4.3 mL, 4.52 mmol) was added dropwise over 5 minutes. The resulting mixture was stirred at the same temperature for 3 hours. Subsequently, a solution of Compound 2 (672 mg, 0.837 mmol) obtained in Synthesis Example 3 in anhydrous cyclopentyl methyl ether (CPME; 16.5 mL) was added dropwise over a period of 15 minutes or more. The mixture was further washed with 3.5 mL of anhydrous cyclopentyl methyl ether (CPME) and the resulting mixture was stirred at -78°C for 4.5 hours. Subsequently, the mixture was heated to room temperature. The flask was opened to atmosphere and the solution was concentrated under reduced pressure. The residue was dissolved in CH₂Cl₂ and washed with an aqueous saturated NH₄Cl solution. The aqueous layer was further extracted three times with CH₂Cl₂ (50 mL each). The combined organic layers were washed with saturated brine and dried over Na₂SO₄, and the solvent was removed under vacuum. The crude product was purified by silica gel column chromatography (CH₂Cl₂/AcOEt = 100/0 to 10/1; AcOEt represents ethyl acetate) to give 568 mg (0.546 mmol, yield: 65%) of Compound 9 as a brown solid.
Melting point: 196.0°C.
¹H NMR (500 MHz, CD₂Cl₂): δ 7.80 (dd, J = 13.5 Hz, 7.6 Hz, 2H), 7.54 (t, J = 7.2 Hz, 1H), 7.47 (t, J = 8.0 Hz, 2H), 7.35 (d, J = 8.9 Hz, 4H), 7.33 (s, 2H), 7.25 (t, J = 7.6 Hz, 8H), 7.20 (d, J = 4.5 Hz, 2H), 7.06 (d, J = 7.6 Hz, 8H), 7.04 (t, J = 7.4 Hz, 4H), 6.97 (d, J = 8.5 Hz, 4H), 3.71 (s, 6H), 1.60 (s, 9H).
¹³C NMR (125 MHz, CD₂Cl₂): δ 164.8 (s, C), 158.2 (s, C), 157.6 (d, J_{CP} = 10.0 Hz, C), 148.4 (s, C), 147.7 (s, C), 145.3 (d, J_{CP} = 15.4 Hz, C), 134.5 (s, C), 134.4 (d, J_{CP} = 112.9 Hz, C), 132.2 (s, CH), 131.8 (d, J_{CP} = 10.9 Hz, CH), 129.8 (d, J_{CP} = 107.4 Hz, C), 129.7 (s, CH), 128.9 (d, J_{CP} = 12.6 Hz, CH), 127.2 (s, C), 127.1 (s, CH), 125.2 (s, CH), 123.8 (s, CH), 123.4 (s, CH), 121.7 (d, J_{CP} = 13.5 Hz, CH), 107.6 (s, CH), 82.2 (s, C), 73.2 (d, J_{CP} = 5.4 Hz, C), 57.1 (s, CH₃), 28.3 (s, CH₃). One quaternary carbon signal is overlapped.
³¹P{1H} NMR (202 MHz, CD₂Cl₂): δ 0.9.
HRMS (ESI): m/z calcd. for C₆₄H₅₃N₂O₆PS₂: 1040.3077 (M^{+·}). Obsd. 1040.3069.

### Example 4: 8-{4-carboxy-2,6-dimethoxyphenyl}-2,6-bis{4-[diphenylamino]phenyl}-4-phenyl-8H-phosphinino{3,2-b:5,6-b'}dithiophen-8-ylium P-oxide 2,2,2-trifluoroacetate (Compound 10)

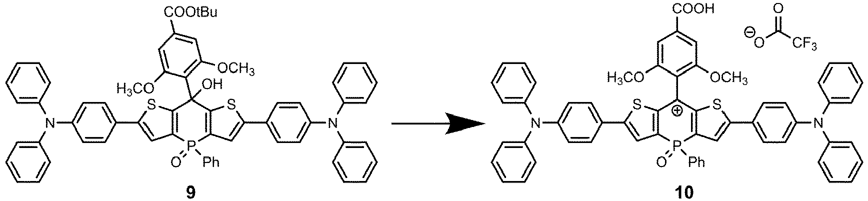

wherein Ph represents phenyl and tBu represents tert-butyl.

0.77 mL of trifluoroacetic acid (TFA) was added dropwise to a solution of Compound 9 (210 mg, 0.202 mmol) obtained in Synthesis Example 8 in CH₂Cl₂ (3.3 mL). The resulting solution was stirred overnight. Subsequently, the solution was washed with an aqueous 5M trifluoroacetic acid (TFA) solution (10 mL), and the resulting aqueous solution was extracted three times with CH₂Cl₂. The combined organic layers were dried over anhydrous Na₂SO₄. After the solvent was removed under reduced pressure, the residue was recrystallized from bilayer diffusion of CH₂Cl₂ and hexane. The resulting crystals were filtered, washed with a small amount of hexane, and dried under vacuum to give 214 mg (0.198 mmol, yield: 98%) of Compound 10 as a dark solid.
Melting point: > 300.0°C.
¹H NMR (500 MHz, CDCl₃): δ 7.99 (d, J = 6.5 Hz, 2H), 7.84 (dd, J = 14.0 Hz, 7.6 Hz, 2H), 7.67 (t, J = 7.3 Hz, 1H), 7.59-7.56 (m, 4H), 7.53 (d, J = 9.0 Hz, 4H), 7.39 (t, J = 7.5 Hz, 8H), 7.27 (t, J = 7.5 Hz, 4H), 7.16 (d, J = 7.5 Hz, 8H), 6.93 (d, J = 9.0 Hz, 4H), 3.90 (s, 3H), 3.87 (s, 3H).
³¹P{¹H} NMR (202 MHz, CDCl₃): δ 4.8. HRMS (ESI): m/z calcd. for C₆₀H₄₄N₂O₅PS₂: 967.2424 (M⁺). Obsd. 967.2421.

### Synthesis Example 9: 2,6-bis{4-[di-o-tolylamino]phenyl}-4-phenylspiro{phosphinino[3,2-b:5,6-b']dithiophen-8,2'-(1,3)dioxolane}P-oxide (Compound 11)

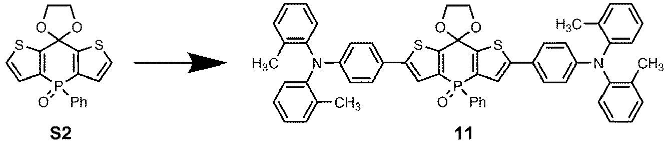

wherein Ph represents phenyl.

4-Phenylspiro{phosphinino[3,2-b:5,6-b']dithiophen-8,2'-(1,3)dioxolane}P-oxide (Compound S2; 1.18 g, 3.28 mmol), N-{4-bromophenyl}-2-methyl-N-{o-tolyl}aniline (3.05 g, 8.66 mmol), palladium acetate (Pd(OAc)₂; 75.8 mg, 0.338 mmol), tricyclohexylphosphine tetrafluoroborate (PCy₃HBF₄; 252 mg, 0.683 mmol), pivalic acid (206 mg, 2.02 mmol), and potassium carbonate (K₂CO₃; 1.83 g, 13.2 mmol) were added to a heat-dried 200-mL Erlenmeyer flask and dissolved in anhydrous N,N-dimethylacetamide (anhydrous DMA; 60 mL). The reaction mixture was heated to 120°C and stirred overnight. After cooling the mixture to room temperature, the reaction was quenched with an aqueous saturated NH₄Cl solution. The aqueous layer was extracted three times with toluene. The combined organic layers were dried over anhydrous sodium sulfate (Na₂SO₄) and concentrated under reduced pressure. The residue was purified by silica gel column chromatography (CHCl₃, R_{f} = 0.15) to give 2.95 g (3.27 mmol, yield: 99%) of Compound 11 as a red solid.
¹H NMR (500 MHz, CDCl₃): δ 7.83 (dd, J = 13.2 Hz, 7.5 Hz, 2H), 7.47-7.39 (m, 3H), 7.35 (d, J = 8.5 Hz, 2H), 7.33 (d, J = 4.5 Hz, 2H), 7.21 (d, J = 7.8 Hz, 4H), 7.14 (t, J = 7.5 Hz, 4H), 7.10 (t, J = 7.8 Hz, 4H), 6.98 (d, J = 7.8 Hz, 4H), 6.61 (d, J = 8.8 Hz, 4H), 4.47 (t, J = 5.5 Hz, 2H), 4.40 (t, J = 5.5 Hz, 2H), 2.02 (s, 12H) .
³¹P{¹H} NMR (202 MHz, CDCl₃) : δ 2.2.

### Synthesis Example 10: 2,6-bis{4-[di-o-tolylamino]phenyl}-4-phenyl-8H-phosphinino{3,2-b:5,6-b'}dithiophen-8-one P-oxide (Compound 12)

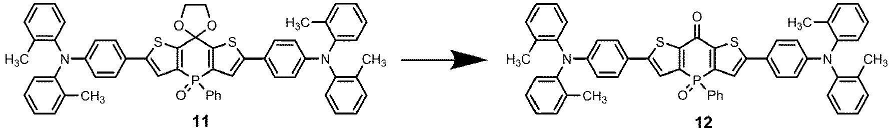

wherein Ph represents phenyl.

In a 100-mL round-bottom flask, Compound 11 (2.95 g, 3.27 mmol) obtained in Synthesis Example 9 was dissolved in 50 mL of CH₂Cl₂. 5.0 mL concentrated HCl was added to the round-bottom flask and the reaction mixture was stirred overnight. The reaction was quenched with ice water. The aqueous layer was then extracted three times with CH₂Cl₂. The combined organic layers were washed with saturated brine, dried over anhydrous Na₂SO₄, and concentrated under reduced pressure. The residue was purified by silica gel column chromatography (CHCl₃, R_{f} = 0.13) to give 2.52 g (2.93 mmol, yield: 90%) of Compound 12 as a dark red solid.
Melting point: 197.9 to 198.3°C.
¹H NMR (500 MHz, CDCl₃): δ 7.74 (dd, J = 13.7 Hz, 7.0 Hz, 2H), 7.52 (t, J = 6.7 Hz, 1H), 7.47-7.46 (overlapped t, 2H), 7.45 (d, J = 5.0 Hz, 2H), 7.44 (d, J = 8.8 Hz, 4H), 7.23 (dd, J = 7.2 Hz, 1.7 Hz, 4H), 7.16 (td, J = 7.5 Hz, 1.8 Hz, 4H), 7.12 (td, J = 7.5 Hz, 1.8 Hz, 4H), 7.00 (dd, J = 7.6 Hz, 1.5 Hz, 4H), 6.61 (d, J = 8.8 Hz, 4H), 2.05 (s, 12H).
¹³C NMR (125 MHz, CDCl₃) : δ 171.9 (d, J_{CP} = 5.4 Hz, C), 155.5 (d, J_{CP} = 16.3 Hz, C), 150.1 (s, C), 144.9 (s, C), 142.8 (d, J_{CP} = 9.0 Hz, C), 140.5 (d, J_{CP} = 101.0 Hz, C), 135.0 (s, C), 132.7 (s, CH), 132.0 (s, CH), 131.1 (d, J_{CP} = 111.9 Hz, C), 131.0 (d, J_{CP} = 10.9 Hz, CH), 129.2 (d, J_{CP} = 12.6 Hz, CH), 127.9 (s, CH), 127.5 (s, CH), 127.4 (s, CH), 125.8 (s, CH), 123.8 (d, J_{CP} = 11.8 Hz, CH), 123.7 (s, C), 119.0 (s, CH), 19.1 (s, CH₃).
³¹P{¹H} NMR (202 MHz, CDCl₃): δ 1.9.
HRMS (ESI) : m/z calcd. for C₅₅H₄₄N₂O₂PS₂: 859.2576 (M+H⁺). Obsd. 859.2567

### Synthesis Example 11: 2,6-bis{4-[di-o-tolylamino]phenyl}-8-{2,6-dimethoxyphenyl}-8-hydroxy-4-phenyl-8H-phosphinino{3,2-b:5,6-b'}dithiophene P-oxide (Compound 13)

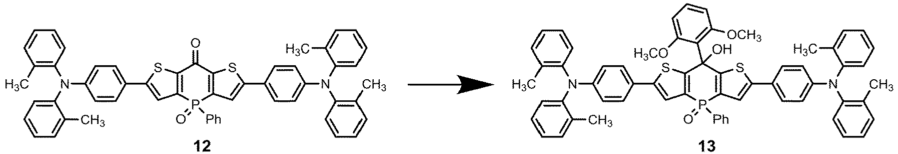

wherein Ph represents phenyl.

In a heat-dried Schlenk flask, 2-bromo-1,3-dimethoxybenzene (185 mg, 0.851 mmol) was dissolved in anhydrous cyclopentyl methyl ether (anhydrous CPME; 1.7 mL). After cooling to -78°C, sec-butyl lithium (1.05M in cyclohexane and n-hexane, 0.90 mL, 0.945 mmol) was added dropwise. The resulting mixture was stirred at the same temperature for 2.5 hours. Subsequently, a solution of Compound 12 (147 mg, 0.171 mmol) obtained in Synthesis Example 10 in anhydrous cyclopentyl methyl ether (anhydrous CPME; 3.5 mL) was added dropwise over a period of 15 minutes or more. Further, the resulting mixture was washed with 1.0 mL of anhydrous cyclopentyl methyl ether (CPME), and the resulting mixture was stirred and gradually heated to ambient temperature overnight. The reaction was quenched with an aqueous saturated NH₄Cl solution. The aqueous layer was extracted three times with CH₂Cl₂. The combined organic layers were washed with saturated brine and dried over anhydrous Na₂SO₄, and the solvent was removed under vacuum. The residue was purified by silica gel column chromatography (CH₂Cl₂/AcOEt = 100/0 to 10/1; AcOEt represents ethyl acetate) to give 41.3 mg (41.4 µmol, yield: 24%) of Compound 13 as a brown solid.
¹H NMR (500 MHz, CDCl₃): δ 7.84 (dd, J = 13.0 Hz, 6.9 Hz, 2H), 7.46 (td, J = 7.2 Hz, 1.6 Hz, 1H), 7.41 (td, J = 7.2 Hz, 1.6 Hz, 2H), 7.34 (t, J = 8.3 Hz, 1H), 7.27 (d, J = 8.7 Hz, 4H), 7.21 (d, J = 4.5 Hz, 2H), 7.18 (d, J = 8.0 Hz, 4H), 7.12 (td, J = 7.4 Hz, 1.6 Hz, 4H), 7.07 (td, J = 7.4 Hz, 1.6 Hz, 4H), 6.95 (dd, J = 7.6 Hz, 1.3 Hz, 4H), 6.68 (d, J = 8.3 Hz, 2H), 6.56 (d, J = 8.7 Hz, 4H), 3.61 (s, 6H), 2.00 (s, 12H).

### Example 5: 2,6-bis{4-[di-o-tolylamino]phenyl}-8-{2,6-dimethoxyphenyl}-4-phenyl-8H-phosphinino{3,2-b:5,6-b'}dithiophen-8-ylium P-oxide 2,2,2-trifluoroacetate (Compound 14)

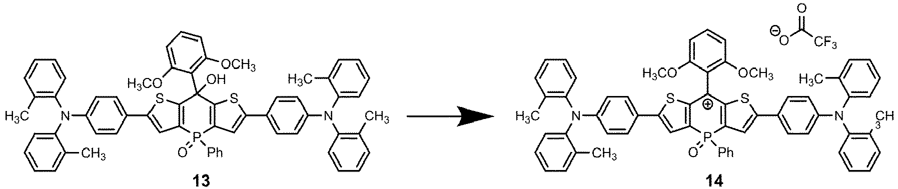

wherein Ph represents phenyl.

0.10 mL of trifluoroacetic acid (TFA) was added dropwise to a solution of Compound 13 (41.3 mg, 0.0414 mmol) obtained in Synthesis Example 11 in CH₂Cl₂ (1.4 mL). The resulting solution was stirred overnight. Subsequently, the solution was washed with a 5M aqueous trifluoroacetic acid (TFA) solution (10 mL) and the resulting aqueous solution was extracted three times with CH₂Cl₂. The combined organic layers were dried over anhydrous Na₂SO₄. After the solvent was removed under reduced pressure, the obtained product was purified by recrystallization by a two-layer diffusion method using CH₂Cl₂ and hexane to give 25.8 mg (23.6 µmol, yield: 57%) of Compound 14 as a dark black solid.
Melting point: 218.5 to 219.5°C.
¹H NMR (500 MHz, CDCl₃): δ 7.98 (broad, 2H), 7.83 (dd, J = 13.5 Hz, 7.0 Hz, 2H), 7.67 (t, J = 7.5 Hz, 1H), 7.58 (broad, 7H), 7.30-7.19 (m, 16H), 7.01 (d, J = 7.0 Hz, 4H), 6.57 (broad, 2H), 3.87 (s, 3H), 3.82 (s, 3H), 2.09 (s, 12H).
³¹P{¹H} NMR (202 MHz, CDCl₃): δ 5.1.
HRMS (ESI) : m/z calcd. for C₆₃H₅₂N₂O₃PS₂: 979.3151 (M⁺). Obsd. 979.3150.

### Comparative Example 1: bis(5-aminothieno)[2,3-b;3',2'-e]-4-(2,6-dimethoxy)-1-phenyl-2H-phosphinium-1-oxide trifluoroacetate (Compound 15)

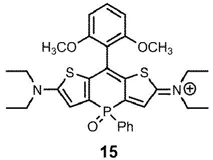

For comparison, Compound 6 synthesized in Example 2 of WO2017/155042 was synthesized according to the method used in Example 2 of WO2017/155042.

### Test Example 1: Photophysical Properties (No. 1)

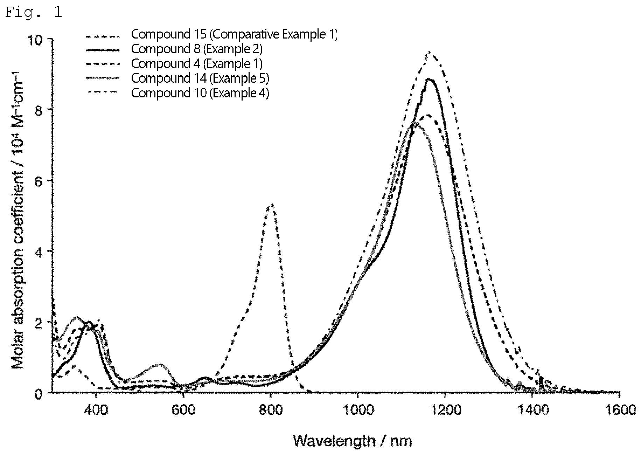

UV-Vis-NIR absorption spectra of Compounds 4, 8, 10, 14, and 15 obtained in Examples 1, 2, 4, and 5 and Comparative Example 1 (UV-Vis-NIR absorption spectra) were measured with a Shimadzu UV-3600 Plus spectrometer or a Shimadzu UV-3600 spectrometer by placing 10⁻⁵M sample solutions in 1 cm square quartz cells and performing measurement with a wavelength resolution of 1.0 nm. Fig. 1 and Table 1 show the results. Fig. 1 shows that the dithienophosphorine compound of the present invention has a maximum absorption wavelength in the near-infrared NIR-II region (around 1200 nm) and has almost no peak in the visible light region of 380 to 750 nm; that is, it can be understood from Fig. 1 that the dithienophosphorine compound of the present invention is a colorless near-infrared absorption material. Further, since Compounds 4 and 8 obtained in Examples 1 and 2 are materials that absorb near-infrared rays and do not absorb visible rays, it can also be understood that for example, when applied to window materials, Compound 4 and Compound 8 can be used as heat shield materials that efficiently cut the energy of near-infrared rays contained in sunlight and significantly suppress a rise in room temperature while maintaining brightness.

Among these, Compound 8 obtained in Example 2 had the longest absorption band (λ_{abs} = 1162 nm, ε = 8.86 × 10⁴ M⁻¹cm⁻¹). Compared to Compound 15 obtained in Comparative Example 1 (λ_{abs} = 801 nm, ε = 5.34 × 10⁴ M⁻¹cm⁻¹), which is a dithienophosphorine compound corresponding to Compound 8, the molar absorption coefficient increased and dramatic shifting to a longer wavelength occurred. The results show that lateral extension of π-conjugation is actually effective in achieving the desired absorption properties suitable for colorless fluorophores in the NIR-II region. Similar results were also obtained with Compound 4 (λ_{abs} = 1161 nm, ε = 7.83 × 10⁴ M⁻¹cm⁻¹) obtained in Example 1, Compound 10 (λ_{abs} = 1170 nm, ε = 9.52 × 10⁴ M⁻¹cm⁻¹) obtained in Example 4, and Compound 14 (λ_{abs} = 1128 nm, ε = 7.63 × 10⁴ M⁻¹cm⁻¹) obtained in Example 5.

**Table 1**

| | | λ_{abs} (nm) | ε (10⁴ M⁻¹cm⁻¹) |
|---|---|---|---|
| Example 1 | Compound 4 | 1161 | 7.83 |
| Example 2 | Compound 8 | 1162 | 8.86 |
| Example 4 | Compound 10 | 1170 | 9.52 |
| Example 5 | Compound 14 | 1128 | 7.63 |
| Comp. Ex. 1 | Compound 15 | 801 | 5.34 |

### Test Example 2: Electrochemical Characteristics

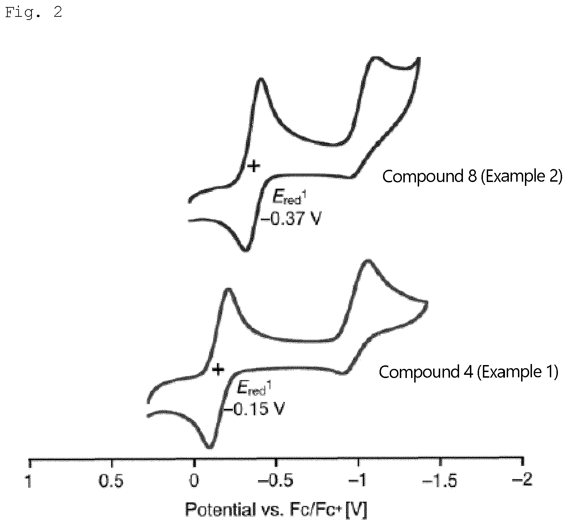

Based on the hypothesis that the dithienophosphorine compound of the present invention is a suitable candidate for a stable organic radical, cyclic voltammetry (CV) measurements were performed. Cyclic voltammetry (CV) measurements of Compound 4 and Compound 8 obtained in Examples 1 and 2 were performed using an ALS/chi-617A electrochemical analyzer (BAS). The CV cell consisted of a glassy carbon electrode, a Pt wire counter electrode, and an Ag/AgNO₃ reference electrode. Measurements were performed using sample solutions (c = 1mM) in THF containing 0.1 M tetrabutylammonium hexafluorophosphate ([Bu₄N][PF₆]) as a supporting electrolyte at a scanning rate of 50 mV/s under an argon atmosphere. The redox potential was calibrated using a ferrocene/ferrocenium ion pair as an external standard. Fig. 2 and Table 2 show the results. All of the compounds actually showed a two-stage redox wave upon reduction due to the formation of neutral radical and anion species. The results show that the reduction potential of Compound 4 obtained in Example 1 (E_{1/2} = -0.15 V, E_{pc} = - 1.06 V vs Fc/Fc⁺) was greater than that of Compound 8 obtained in Example 2 (E_{1/2} = -0.37 V, E_{pc} = - 1.12 V vs Fc/Fc⁺), and the terminal diphenylamino group had a lower LUMO than the terminal diethylamino group. Further, in contrast to the pseudo-reversible second redox process showing a lack of chemical stability of anion species, the reversibility of the first redox process suggests that neutral radical species have sufficiently high chemical stability. Thus, the neutral radical species produced are the following dithienophosphorine compounds of the present invention (Compound 4· and Compound 8·).

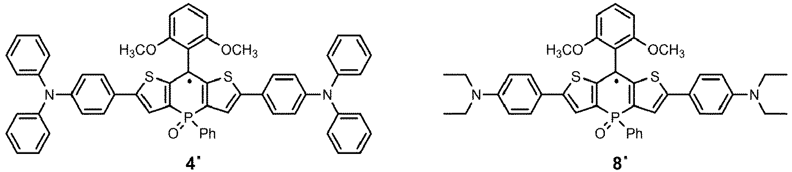

**Table 2**

| | | E_{pC1} (V vs Fc/Fc⁺) | E_{pC2} (V vs Fc/Fc⁺) |
|---|---|---|---|
| Example 1 | Compound 4 | -0.21 (-0.15) | -1.06 |
| Example 2 | Compound 8 | -0.42 (-0.37) | -1.12 |

### Test Example 3: Photophysical Properties (No. 2)

Since the results of the cyclic voltammetry measurement indicated that reduction of the dithienophosphorine compound of the present invention generates neutral radical species, the dithienophosphorine compound of the present invention was chemically reduced. Compound 4· was quantitatively generated by allowing 1 mole equivalent of a solution of decamethylferrocene (a reducing agent suitable for one-electron reduction from Compound 4, the reducing agent having an oxidation potential in CH₂Cl₂ of -0.59 V based on ferrocene/ferrocenium basis) in tetrahydrofuran (THF) to act on a solution of Compound 4 obtained in Example 1 in dichloromethane. As a result, the color of the solution spontaneously changed from a light color to dark red. Since no signals were observed in the NMR spectrum, the generation of a neutral radical was confirmed.

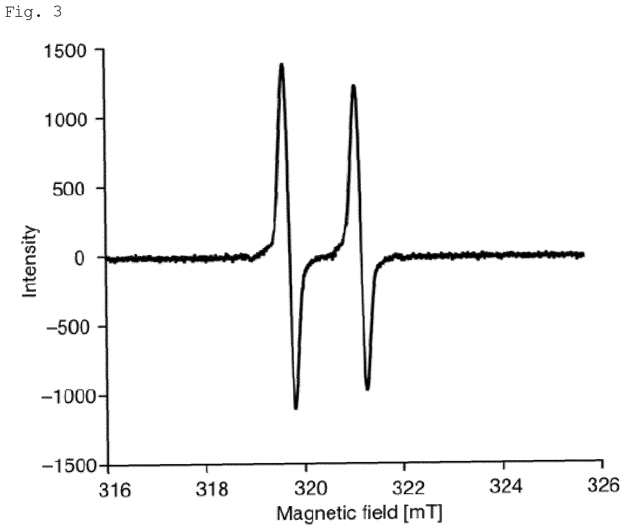

The dithienophosphorine compound of the present invention having a radical (compound 4·) obtained by a reaction of compound 4 with decamethylferrocenehad sufficient stability and could be treated without decomposition even without extreme caution. The presence of radical species was confirmed by electron paramagnetic resonance (EPR) measurements (Fig. 3).

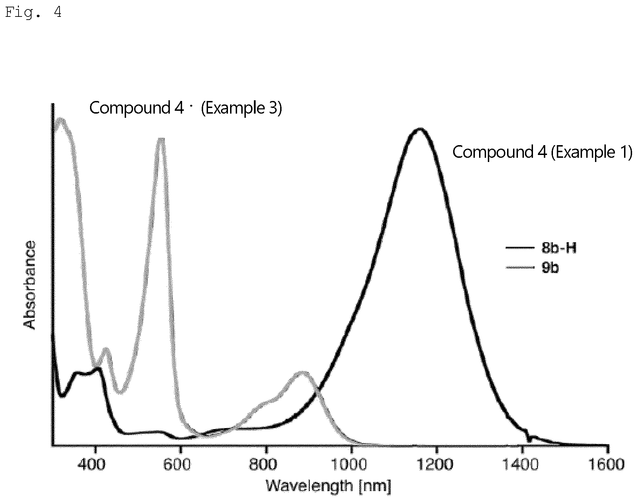

The UV-Vis-NIR absorption spectra of the dithienophosphorine compound of the present invention having a radical obtained by the reaction of Compound 4 with decamethylferrocene (Compound 4·) were measured with a Shimadzu UV-3600 Plus spectrometer and a Shimadzu UV-3600 spectrometer by placing each 10⁻⁵ M sample solution in a 1 cm square quartz cell and performing the measurement with a wavelength resolution of 1.0 nm. Fig. 4 shows the results. Fig. 4 shows that the dithienophosphorine compound of the present invention having a radical has no absorption peak in the near-infrared NIR-II region (1000 to 1500 nm) and had a strong absorption peak with a maximum absorption wavelength near 555 nm in the visible light region. The dithienophosphorine compound of the present invention also had a weak absorption peak with a maximum absorption wavelength near 880 nm in the NIR-I region. That is, when the dithienophosphorine compound of the present invention is oxidized or reduced, a strong absorption band appears in the visible light region after switching between the NIR-I region and the NIR-II region, and infrared absorption and visible light absorption of the dithienophosphorine compound can be switched. Therefore, the dithienophosphorine compound of the present invention can be used as an electrochromic material.

## Claims

1. A dithienophosphorine compound having a cation represented by formula (1): 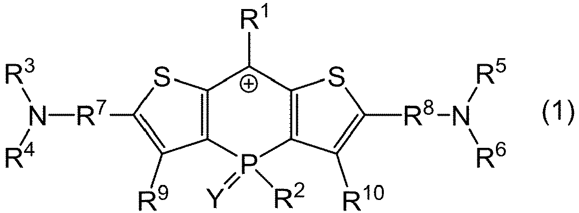 wherein
Y represents an oxygen atom or a sulfur atom;
R¹ represents a hydrogen atom, a substituted or unsubstituted alkyl group, a substituted or unsubstituted alkenyl group, a substituted or unsubstituted alkynyl group, a substituted or unsubstituted aryl group, or a substituted or unsubstituted heteroaryl group;
R² represents a hydroxy group, a substituted or unsubstituted alkyl group, a substituted or unsubstituted alkoxy group, a substituted or unsubstituted alkenyl group, a substituted or unsubstituted alkynyl group, a substituted or unsubstituted aryl group, or a substituted or unsubstituted heteroaryl group;
R³, R⁴, R⁵, and R⁶ are the same or different and represent a hydrogen atom, a substituted or unsubstituted alkyl group, a substituted or unsubstituted alkenyl group, or a substituted or unsubstituted aryl group;
R⁷ and R⁸ are the same or different and represent a substituted or unsubstituted arylene group or a substituted or unsubstituted heteroarylene group;
R³ and R⁴ may bind to each other and/or R⁵ and R⁶ may bind to each other to form a ring together with an adjacent nitrogen atom;
at least one of the following pairs: R³ and R⁷, R⁴ and R⁷, R⁵ and R⁸, and R⁶ and R⁸, may bind to each other to form a ring with an adjacent nitrogen atom; and
R⁹ and R¹⁰ are the same or different and represent a hydrogen atom, a halogen atom, a sulfonyl group, a substituted or unsubstituted alkyl group, or a substituted or unsubstituted aryl group.

2. The dithienophosphorine compound according to claim 1, wherein the compound is represented by formula (1A): 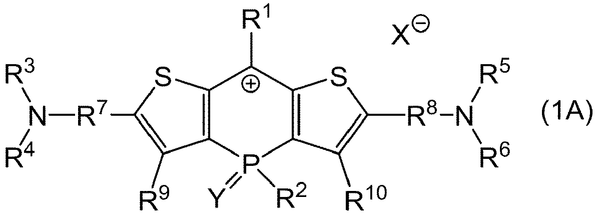 wherein Y, R¹, R², R³, R⁴, R⁵, R⁶, R⁷, R⁸, R⁹, and R¹⁰ are as defined above, and X⁻ represents an anion.

3. A dithienophosphorine compound represented by formula (2) : 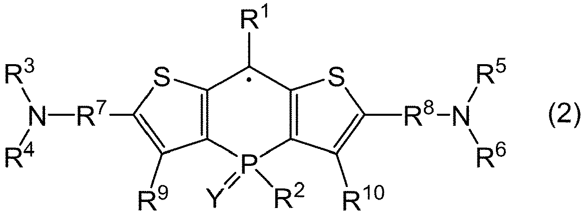 wherein
Y represents an oxygen atom or a sulfur atom;
R¹ represents a hydrogen atom, a substituted or unsubstituted alkyl group, a substituted or unsubstituted alkenyl group, a substituted or unsubstituted alkynyl group, a substituted or unsubstituted aryl group, or a substituted or unsubstituted heteroaryl group;
R² represents a hydroxy group, a substituted or unsubstituted alkyl group, a substituted or unsubstituted alkoxy group, a substituted or unsubstituted alkenyl group, a substituted or unsubstituted alkynyl group, a substituted or unsubstituted aryl group, or a substituted or unsubstituted heteroaryl group;
R³, R⁴, R⁵, and R⁶ are the same or different and represent a hydrogen atom, a substituted or unsubstituted alkyl group, a substituted or unsubstituted alkenyl group, or a substituted or unsubstituted aryl group;
R⁷ and R⁸ are the same or different and represent a substituted or unsubstituted arylene group or a substituted or unsubstituted heteroarylene group;
R³ and R⁴ may bind to each other and/or R⁵ and R⁶ may bind to each other to form a ring with an adjacent nitrogen atom;
at least one of the following pairs: R³ and R⁷, R⁴ and R⁷, R⁵ and R⁸, and R⁶ and R⁸, may bind to each other to form a ring with an adjacent nitrogen atom; and
R⁹ and R¹⁰ are the same or different and represent a hydrogen atom, a halogen atom, a sulfonyl group, a substituted or unsubstituted alkyl group, or a substituted or unsubstituted aryl group.

4. The dithienophosphorine compound according to any one of claims 1 to 3, wherein R⁷ and R⁸ are the same or different and represent a substituted or unsubstituted arylene group.

5. The dithienophosphorine compound according to any one of claims 1 to 4, wherein R¹ is a substituted or unsubstituted aryl group.

6. The dithienophosphorine compound according to any one of claims 1 to 5, wherein Y is an oxygen atom.

7. The dithienophosphorine compound according to any one of claims 1 to 6, wherein R² is a substituted or unsubstituted aryl group.

8. The dithienophosphorine compound according to any one of claims 1 to 7, wherein R³, R⁴, R⁵, and R⁶ are the same or different and represent a substituted or unsubstituted alkyl group or a substituted or unsubstituted aryl group.

9. The dithienophosphorine compound according to any one of claims 1 to 8, wherein R⁹ and R¹⁰ are both a hydrogen atom.

10. The dithienophosphorine compound according to any one of claims 1 to 9, having a maximum absorption wavelength at 1000 to 1500 nm.

11. A near-infrared absorbing material comprising the dithienophosphorine compound of any one of claims 1, 2, and 4 to 10.

12. The near-infrared absorbing material according to claim 11, which is a colorless near-infrared absorbing material.

13. An electrochromic material comprising the dithienophosphorine compound of any one of claims 1 to 10.

14. A heat shield material comprising the dithienophosphorine compound of any one of claims 1, 2, and 4 to 10.
